# EUROPÄISCHE PATENTSCHRIFT

(11) **EP 2 891 237 B1**
(45) Veröffentlichungstag und Bekanntmachung des Hinweises auf die Patenterteilung: **09.01.2019**
(21) Anmeldenummer: 13753424.4
(22) Anmeldetag: 14.08.2013
(51) Int. Cl.: H02K 23/62, H02K 13/00

(54) **KONTAKTKOMMUTIERTER ELEKTROMOTOR**
CONTACT-COMMUTATED ELECTRIC MOTOR
MOTEUR ÉLECTRIQUE À COMMUTATION PAR CONTACT

(30) Priorität: 31.08.2012 DE 102012215522
(43) Veröffentlichungstag der Anmeldung: 08.07.2015
(73) Patentinhaber: Mahle International GmbH, 70376 Stuttgart (DE)
(72) Erfinder: FRÖBEL, Marcel, 74374 Zaberfeld (DE); HELMIS, Martin, 50825 Köln (DE); MACK, Bernd, 73630 Remshalden (DE); WIESKE, Peter, 70825 Korntal-Münchingen (DE)
(74) Vertreter: BRP Renaud & Partner mbB Rechtsanwälte Patentanwälte Steuerberater
(86) Internationale Anmeldenummer: PCT/EP2013/067015
(87) Internationale Veröffentlichungsnummer: WO 2014/032978

(56) Entgegenhaltungen:
- EP-A1- 1 113 569
- WO-A1-2012/049781
- FR-A1- 2 801 737
- US-A- 4 949 023

## Beschreibung

Die vorliegende Erfindung betrifft einen Elektromotor mit Kontaktkommutierung mit den Merkmalen des Oberbegriffs des Anspruchs 1. Die vorliegende Erfindung betrifft außerdem ein Fahrzeugbauteil, das mit einem verstellbaren Stellglied und mit einem Elektromotor der vorstehend beschriebenen Art ausgestattet ist.

Elektromotoren sind allgemein bekannt und umfassen einen Stator und einen relativ zum Stator drehbaren Rotor, wobei der Rotor eine Antriebswelle des Elektromotors antreibt oder bildet, über die Antriebsleistung am Elektromotor abgegriffen werden kann. Elektromotoren werden unterschieden in Gleichstrom-Elektromotoren, kurz DC-Motoren, und Wechselstrom-Elektromotoren, kurz AC-Motoren. Ferner werden Innenläufer, bei denen der Rotor konzentrisch im Stator angeordnet ist, und Außenläufer, bei denen der Stator konzentrisch im Rotor angeordnet ist, voneinander unterschieden. Schließlich werden kontaktlos kommutierte Elektromotoren von kontaktkommutierten Elektromotoren unterschieden. Eine Kontaktkommutierung erfolgt über einen körperlichen oder mechanischen Kontakt mittels wenigstens eines Kontaktelements, das hierzu an einer Schleifkontur direkt anliegt und dabei eine elektrische Verbindung erzeugt. Das Kontaktelement kann auch als "Bürste" bezeichnet werden. In der Regel weist ein derartiges Kontaktelement einen Kontaktkörper aus Kohlenstoff auf. Im Unterschied dazu erfolgt eine kontaktlose Kommutierung elektronisch, also über eine entsprechende Elektronik bzw. elektrische Schaltung.

Elektromotoren kommen in nahezu allen Gebieten der Technik zum Einsatz. Insbesondere kommen Elektromotoren auch bei Fahrzeugen zum Einsatz, um bewegliche Stellglieder zu verstellen. Beispielhaft und ohne Beschränkung der Allgemeinheit sei hier genannt eine Drosselvorrichtung mit einer Drosselklappe als Stellglied, die mit Hilfe eines Elektromotors verstellbar ist, um in einer Frischluftanlage einer Brennkraftmaschine die Drosselung des Frischluftstroms einzustellen. Ferner sind Klappenvorrichtungen denkbar, bei denen zumindest eine Klappe mit Hilfe eines Elektromotors verstellbar ist, beispielsweise um die Zuströmung von Frischluft in einen Brennraum der Brennkraftmaschine zu beeinflussen. Des Weiteren können Elektromotoren bei einer Turbine einer Ladeeinrichtung, vorzugsweise bei einem Abgasturbolader, zum Einsatz kommen, beispielsweise um ein Wastegate-Ventil oder um eine variable Turbinengeometrie zu betätigen.

Insbesondere bei Fahrzeuganwendungen kann der jeweilige Elektromotor einer vergleichsweise großen thermischen Belastung ausgesetzt sein, wodurch sich die Dauerhaltbarkeit bzw. die erwartete Lebensdauer des jeweiligen Elektromotors reduziert.

Eine erhöhte thermische Belastung ergibt sich insbesondere auch bei solchen Anwendungen, bei denen der Elektromotor ein Stellglied gegen eine Rückstellkraft halten muss, so dass in der jeweiligen Spulenanordnung die gesamte elektrische Leistung in Wärme umgewandelt wird, die bei einer warmen oder heißen Umgebung nicht oder nur schlecht abgeführt werden kann.

Ein gattungsgemäßer Elektromotor ist aus der US 4,949,023 bekannt.

Die vorliegende Erfindung beschäftigt sich mit dem Problem, für einen derartigen Elektromotor bzw. für ein damit ausgestattetes Fahrzeugbauteil eine verbesserte Ausführungsform anzugeben, die sich insbesondere durch eine erhöhte Lebensdauer des Elektromotors auszeichnet.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Elektromotor als Innenläufer mit Kontaktkommutierung auszustatten, bei dem eine Spulenanordnung ausschließlich am Stator angeordnet ist, während am Rotor eine Magnetanordnung vorgesehen ist. Durch die Verwendung einer Kontaktkommutierung kann auf eine Elektronik verzichtet werden, die bei einer kontaktlosen Kommutierung erforderlich ist. Durch die Unterbringung der Spulenanordnung am Stator befindet sich die jeweilige Spule beim Innenläufer radial außen, also einerseits auf einem vergleichsweise großen Querschnitt und andererseits an oder in einem Gehäuse des Elektromotors, wodurch Wärme der Spulenanordnung vergleichsweise einfach abgeführt werden kann. Durch den vorgeschlagenen Aufbau ist die thermische Belastung des Elektromotors signifikant reduziert, was die Lebensdauer des Elektromotors und eines gegebenenfalls damit ausgestatteten Fahrzeugbauteils erheblich verlängert.

Durch den erfindungsgemäßen Aufbau lässt sich der Elektromotor vorteilhaft auch in thermisch belasteten Anwendungsfällen verwenden, wie zum Beispiel bei Fahrzeugbauteilen, die motornah angeordnet sind. Dementsprechend besitzt ein damit ausgestattetes Fahrzeugbauteil, beispielsweise eine Drosselvorrichtung oder eine Klappenvorrichtung oder eine Turbine bzw. ein Abgasturbolader mit variabler Turbinengeometrie oder mit einem Wastegate-Ventil, eine erhöhte Lebensdauer.

Der erfindungsgemäße Elektromotor ist vorzugsweise als Gleichstrommotor ausgestaltet. Grundsätzlich ist jedoch auch eine Ausführungsform als Wechselstrommotor möglich.

Die Magnetanordnung umfasst zumindest einen Permanentmagneten, der fest am Rotor angeordnet ist. Die Spulenanordnung umfasst wenigstens eine elektrische Spule, die fest am Stator angeordnet ist. Erfindungsgemäß sind alle Spulen der Spulenanordnung am Stator angeordnet, so dass am Rotor keine Spule angeordnet ist. Vorzugsweise sind sämtliche Permanentmagnete der Magnetanordnung ausschließlich am Rotor angeordnet.

Das Kontaktelement kann auch als "Bürste" bezeichnet werden. In der Regel weist ein derartiges Kontaktelement einen Kontaktkörper aus Kohlenstoff auf.

Entsprechend der Erfindung weist die Kontaktkommutierung eine vom Rotor drehend angeordnete Kontaktelementanordnung mit wenigstens einem Kontaktelement und eine relativ zum Stator drehfest angeordnete, insbesondere fest an einem den Stator drehfest enthaltenden Gehäuse angeordnete, und mit der Spulenanordnung elektrisch verbundene Schleifringanordnung mit wenigstens einem Schleifring auf. Hierdurch ergibt sich eine geometrisch einfache, robuste und zuverlässige mechanische Kommuntierung.

Entsprechend der Erfindung sind mehrere Schleifringe vorgesehen sein, wobei innerhalb der Schleifringanordnung zumindest zwei derartige Schleifringe eine Schleifringgruppe bilden und über wenigstens ein solches Kontaktelement der Kontaktelementanordnung elektrisch miteinander verbunden sind. Zweckmäßig ist dabei die Kontaktelementanordnung bzw. das jeweilige Kontaktelement gegenüber dem Rotor elektrisch isoliert. Ferner ist die Schleifringanordnung bzw. sind die jeweiligen Schleifringe gegenüber dem Gehäuse elektrisch isoliert. Durch die rotorseitig angeordnete, innenliegende Kontaktelementanordnung erfolgt rotorseitig nur die Kommutierung der statorseitig angeordneten Schleifringanordnung, wodurch eine Elektrifizierung der Schleifringe über das stationäre Gehäuse stattfinden kann und dadurch erheblich vereinfacht ist.

Erfindungsgemäß ist vorgesehen sein, dass die jeweilige Schleifringgruppe nur zwei Schleifringe umfasst, die ein Schleifringpaar definieren. Das jeweilige Schleifringpaar kann dann einen ersten Schleifring und einen zweiten Schleifring umfassen. Der erste Schleifring kann mit der Spulenanordnung oder mit dem zugehörigen Spulenstrang elektrisch verbunden sein. Im Unterschied dazu kann der zweite Schleifring in der Umfangsrichtung segmentiert sein und dabei zumindest ein Pluspol-Segment, zumindest ein Minuspol-Segment und wenigstens zwei Isolator-Segmente umfassen. Das jeweilige Pluspol-Segment ist dabei mit einem an einen Pluspol einer Stromversorgung des Elektromotors anschließbaren Pluspolanschluss des Elektromotors elektrisch verbunden, während das jeweilige Minuspol-Segment mit einem an einen Minuspol der Stromversorgung anschließbaren Minuspolanschluss des Elektromotors elektrisch verbunden ist. Im Unterschied dazu ist das jeweilige Isolator-Segment elektrisch isolierend ausgestaltet und in der Umfangsrichtung jeweils zwischen einem Pluspol-Segment und einem Minuspol-Segment angeordnet. Durch den hier vorgeschlagenen Aufbau wird die über den jeweiligen ersten Schleifring zugeordnete Spulenanordnung bzw. der jeweilige zugehörige Spulenstrang bei drehendem Rotor über das jeweilige Kontaktelement abwechselnd mit dem Minuspol und dem Pluspol der Stromversorgung verbunden, wodurch ein rotierendes Magnetfeld mit wechselnder Polung realisierbar ist

Bei einer weiteren vorteilhaften Weiterbildung können innerhalb der Magnetanordnung je ein magnetischer Nordpol und ein magnetischer Südpol ein magnetisches Polpaar definieren, wobei dann die Anzahl der Pluspol-Segmente und die Anzahl der Minuspol-Segmente vorzugsweise gleich der Anzahl der magnetischen Polpaare ist. Beispielsweise ist am Rotor nur ein einziges Polpaar vorhanden, so dass dann der jeweilige zweite Schleifring genau ein Pluspol-Segment und genau ein Minuspol-Segment umfasst. Hierdurch ist es insbesondere möglich, die Kontaktelementanordnung fest am Rotor anzuordnen, so dass die Drehgeschwindigkeit des Rotors mit der Drehgeschwindigkeit der Kontaktelementanordnung übereinstimmt.

Alternativ dazu ist auch eine nicht erfindungsgemäße Ausführungsform denkbar, bei welcher die jeweilige Schleifringgruppe oder die gesamte Schleifringanordnung genau drei Schleifringe umfasst, nämlich einen ersten Schleifring, der mit einem an einen Pluspol einer Stromversorgung des Elektromotors anschließbaren Pluspol-Anschluss des Elektromotors elektrisch verbunden ist, einen zweiten Schleifring, der mit einem an einen Minuspol der Stromversorgung anschließbaren Minuspol-Anschluss des Elektromotors elektrisch verbunden ist, und einen dritten Schleifring, der in der Umfangsrichtung segmentiert ist und mehrere Isolator-Segmente und mehrere elektrisch mit der Spulenanordnung verbundene Spulen-Segmente umfasst, die sich in der Umfangsrichtung abwechseln. Ferner ist bei einer derartigen Ausführungsform zumindest ein Kontaktelement vorgesehen, das den ersten Schleifring mit dem dritten Schleifring elektrisch verbindet, wobei zumindest ein weiteres Kontaktelement vorgesehen ist, das den zweiten Schleifring mit dem dritten Schleifring verbindet. Eine derartige Ausführungsform kommt innerhalb der Schleifringanordnung mit einer reduzierten Anzahl von Schleifringen aus, da über die Leitersegmente des dritten Schleifrings, der zweckmäßig axial zwischen dem ersten Schleifring und dem zweiten Schleifring angeordnet ist, unterschiedliche Spulen bzw. unterschiedliche Spulenstränge angesteuert werden können.

Bei einer weiteren alternativen nicht erfindungsgemäßen Ausführungsform kann vorgesehen sein, dass die Schleifringanordnung nur einen einzigen, gemeinsamen Schleifring aufweist, der in der Umfangsrichtung segmentiert ist und zumindest ein Pluspol-Segment, das mit einem an einen Pluspol einer Stromversorgung des Elektromotors anschließbaren Pluspol-Anschluss des Elektromotors elektrisch verbunden ist, zumindest ein Minuspol-Segment, das mit einem an einen Minuspol der Stromversorgung anschließbaren Minuspol-Anschluss des Elektromotors elektrisch verbunden ist, zumindest ein Spulen-Segment, das mit der Spulenanordnung elektrisch verbunden ist, und zumindest ein elektrisch isolierendes Isolator-Segment aufweist, wobei die verschiedenen Segmente in der Umfangsrichtung so aufeinanderfolgen, dass je ein Spulen-Segment zwischen einem Pluspol-Segment und einem Minuspol-Segment angeordnet ist und je ein Isolator-Segment zwischen einem Pluspol-Segment und einem Minuspol-Segment angeordnet ist. Durch die Verwendung nur eines einzigen, gemeinsamen Schleifrings ergibt sich in axialer Richtung ein extrem kompakter Aufbau für die Kontaktkommutierung.

Bei einer vorteilhaften Weiterbildung kann nun vorgesehen sein, dass innerhalb der Spulenanordnung eine Wicklung, die eine einzige Spule oder mehrere, in Reihe geschaltete Spulen bildet, einen Spulenstrang definiert, wobei die Spulenanordnung mehrere Spulenstränge aufweist. Der gemeinsame Schleifring weist dann mehrere Spulen-Segmente aufweist, wobei jedes Spulen-Segment nur mit einem Spulenstrang elektrisch verbunden ist, während jeder Spulenstrang mit mindestens einem Spulen-Segment elektrisch verbunden ist. Somit lassen sich über den gemeinsamen Schleifring mehrere Spulen bzw. mehrere Spulenstränge kommutieren.

Bei einer weiteren alternativen Ausführungsform kann vorgesehen sein, dass innerhalb der Spulenanordnung eine Wicklung, die eine einzige Spule oder mehrere, in Reihe geschaltete Spulen bildet, einen Spulenstrang definiert, wobei die Spulenanordnung mehrere Spulenstränge aufweist. Die Schleifringanordnung weist in diesem Fall genau zwei Schleifringe auf, wobei ein erster Schleifring in der Umfangsrichtung segmentiert ist und mehrere Pluspol-Segmente, die jeweils mit einem an einen Pluspol einer Stromversorgung des Elektromotors anschließbaren Pluspol-Anschluss des Elektromotors elektrisch verbunden sind, und je Spulenstrang wenigstens ein Spulen-Segment aufweist, das mit dem jeweiligen Spulenstrang elektrisch verbunden ist, wobei die verschiedenen Segmente in der Umfangsrichtung gegeneinander elektrisch isoliert sind. Des Weiteren ist ein zweiter Schleifring in der Umfangsrichtung segmentiert ist und weist mehrere Minuspol-Segmente, die jeweils mit einem an einen Minuspol der Stromversorgung anschließbaren Minuspol-Anschluss des Elektromotors elektrisch verbunden sind, und je Spulenstrang wenigstens ein Spulen-Segment auf, das mit dem jeweiligen Spulenstrang elektrisch verbunden ist, wobei die verschiedenen Segmente in der Umfangsrichtung gegeneinander elektrisch isoliert sind. Bei dieser Bauweise lässt sich bei kompaktem Aufbau eine größere Anzahl an Spulen und Polpaaren steuern, wodurch der Elektromotor größere Momente erzeugen kann. Außerdem kann dadurch die Gefahr von Totstellungen reduziert werden, aus denen heraus der Elektromotor nicht oder nur mit sehr viel Strom anfahrbar ist.

Entsprechend einer vorteilhaften Weiterbildung können im ersten Schleifring die verschiedenen Segmente in der Umfangsrichtung so aufeinanderfolgen, dass zumindest ein Spulen-Segment zwischen zwei Pluspol-Segmenten angeordnet ist, während im zweiten Schleifring die verschiedenen Segmente in der Umfangsrichtung so aufeinanderfolgen können, dass zumindest ein Spulen-Segment zwischen zwei Minuspol-Segmenten angeordnet ist. Hierdurch wird eine sichere Kommutierung unterstützt.

Zusätzlich oder alternativ kann vorgesehen sein, dass der erste Schleifring für jedes Spulen-Segment ein elektrisch isolierendes Isolator-Segment aufweist, wobei die verschiedenen Segmente in der Umfangsrichtung so aufeinanderfolgen, dass jedes Spulen-Segment einerseits an ein Isolator-Segment und andererseits an ein Pluspol-Segment angrenzt. Analog dazu kann vorgesehen sein, dass der zweite Schleifring für jedes Spulen-Segment ein elektrisch isolierendes Isolator-Segment aufweist, wobei die verschiedenen Segmente in der Umfangsrichtung so aufeinanderfolgen, dass jedes Spulen-Segment einerseits an ein Isolator-Segment und andererseits an ein Minuspol-Segment angrenzt. Durch die Verwendung derartiger Isolator-Segmente kann die Verteilung der Spulen-Segmente entlang des Umfangs relativ einfach so erfolgen, dass die Gefahr der vorgenannten Totstellungen zwischen Stator und Rotor reduziert ist.

Ferner kann zur Verbesserung des Startverhaltens vorgesehen sein, dass das jeweilige Isolator-Segment in der Umfangsrichtung größer ist als das jeweilige Pluspol-Segment und/oder als das jeweilige Minuspol-Segment und/oder als das jeweilige Spulen-Segment. Zusätzlich oder alternativ kann vorgesehen sein, dass das jeweilige Spulen-Segment in der Umfangsrichtung gleich groß ist wie das jeweilige Pluspol-Segment und/oder wie das jeweilige Minuspol-Segment.

Eine andere Ausführungsform schlägt vor, dass im ersten Schleifring jedes Spulen-Segment in der Umfangsrichtung beiderseits an ein Pluspol-Segment angrenzt, während im zweiten Schleifring jedes Spulen-Segment in der Umfangsrichtung beiderseits an ein Minuspol-Segment angrenzt. Auch diese Maßnahme reduziert die Gefahr von Totstellungen des Rotors.

Entsprechend einer Weiterbildung kann vorgesehen sein, dass das jeweilige Spulen-Segment in der Umfangsrichtung kleiner ist als das jeweilige Pluspol-Segment und/oder als das jeweilige Minuspol-Segment.

Gemäß einer anderen Ausführungsform kann vorgesehen sein, dass im ersten Schleifring jedem Spulenstrang mehrere Spulen-Segmente zugeordnet sind, die in der Umfangsrichtung aufeinanderfolgen und nur durch Pluspol-Segmente voneinander getrennt sind, wobei im zweiten Schleifring jedem Spulenstrang mehrere Spulen-Segmente zugeordnet sind, die in der Umfangsrichtung aufeinanderfolgen und nur durch Minuspol-Segmente voneinander getrennt sind. Auch hierdurch lässt sich die Gefahr von Totstellungen des Rotors reduzieren.

Gemäß einer bevorzugten Weiterbildung kann vorgesehen sein, dass zumindest eines der Spulen-Segmente, das einem der Spulenstränge zugeordnet ist, in der Umfangsrichtung an ein anderes Spulen-Segment angrenzt, das einem anderen Spulenstrang zugeordnet ist. Die aneinander angrenzenden Spulen-Segmente sind dabei zweckmäßig gegeneinander elektrisch isoliert.

Besonders vorteilhaft ist eine Weiterbildung, bei welcher Spulen-Segmente, die in der Umfangsrichtung beiderseits an Pluspol-Segmente angrenzen, in der Umfangsrichtung gleich groß sind wie die Pluspol-Segmente, während Spulen-Segmente, die in der Umfangsrichtung an ein anderes Spulen-Segment angrenzen, halb so groß sind wie die Pluspol-Segmente, wobei Spulen-Segmente, die in der Umfangsrichtung beiderseits an Minuspol-Segmente angrenzen, in der Umfangsrichtung gleich groß sind wie die Minuspol-Segmente, während Spulen-Segmente, die in der Umfangsrichtung an ein anderes Spulen-Segment angrenzen, halb so groß sind wie die Minuspol-Segmente. Hierdurch verbessert sich das Anfahrverhalten des Rotors.

Vorteilhaft können die beiden Schleifringe relativ zueinander so angeordnet sein, dass die Spulen-Segmente des ersten Schleifrings gegenüber den Spulen-Segmenten des zweiten Schleifrings hinsichtlich der ihnen zugeordneten Spulenstränge in der Umfangsrichtung versetzt angeordnet sind. Auch diese Maßnahme reduziert die Gefahr von Totstellungen und verbessert das Anfahrverhalten des Rotors.

Ferner kann vorgesehen sein, dass die Kontaktelemente, die mit dem jeweiligen Schleifring in Kontakt stehen, axial zwischen den beiden Schleifringen angeordnet sind, wodurch die Kontaktkommutierung in der Radialrichtung sehr klein baut. Gemäß einer vorteilhaften Weiterbildung kann vorgesehen sein, dass ein mit dem ersten Schleifring kontaktiertes erstes Kontaktelement zu einem mit dem zweiten Schleifring kontaktierten zweiten Kontaktelement axial benachbart und davon elektrisch isoliert angeordnet ist. Auch dieses Merkmal unterstützt eine kompakte Bauform.

Gemäß einer vorteilhaften Weiterbildung kann die Spulenanordnung axial versetzt zur Schleifringanordnung am bzw. im Gehäuse angeordnet sein. Hierdurch baut der Elektromotor in der Radialrichtung vergleichsweise kompakt.

Bei einer anderen vorteilhaften Weiterbildung kann eine Wicklung, die eine einzige Spule oder mehrere, in Reihe geschaltete Spulen bildet, einen Spulenstrang definieren. Je nach Ausgestaltung der Schleifringanordnung kann je Spulenstrang eine separate Schleifringgruppe vorgesehen sein, so dass je ein Spulenstrang elektrisch mit nur einer Schleifringgruppe verbunden ist. Durch diese Maßnahme kann bei entsprechender Kommutierung ein rotierendes Magnetfeld generiert werden, das mit dem Magnetfeld der Magnetanordnung zum Antreiben des Rotors zusammenwirkt.

Wie erwähnt ist eine Ausführungsform bevorzugt, bei welcher die Kontaktelementanordnung fest am Rotor angeordnet ist, so dass die Drehgeschwindigkeit des Rotors mit der Drehgeschwindigkeit der Kontaktelementanordnung übereinstimmt.

Bei einer alternativen Ausführungsform kann die Kontaktelementanordnung fest an einer Kontaktelementwelle angeordnet sein, die über ein Getriebe mit dem Rotor des Elektromotors antriebsverbunden ist. Durch diese Maßnahme ist es insbesondere möglich, eine größere Polpaarzahl durch eine entsprechend erhöhte Drehzahl der Kontaktelemente zu kommutieren, während die Anzahl der Pluspol-Segmente und der Minuspol-Segmente im jeweiligen zweiten Schleifring dann kleiner ist als die Anzahl der Polpaare.

Eine axial kompakte Bauform wird unterstützt, wenn das jeweilige Kontaktelement den jeweiligen Schleifring radial kontaktiert. Im Unterschied dazu kann eine radial kompakte Bauform erreicht werden, wenn das jeweilige Kontaktelement den jeweiligen Schleifring axial kontaktiert. Ferner hat sich gezeigt, dass axial kontaktierende Kontaktelemente sehr viel genauer herstellbar sind, als radial kontaktierende Kontaktelemente, wodurch das Einschleifen vereinfacht und die Kontaktierung verbessert ist.

Besonders zweckmäßig ist eine Bauform, bei welcher der Schleifring in eine axiale Stirnseite des Stators oder eines den Stator drehfest enthaltenden Gehäuses integriert ist.

Gemäß einer anderen vorteilhaften Weiterbildung kann das jeweilige Kontaktelement über einen am Rotor befestigten Kontaktelementträger am Rotor angeordnet sein, wobei im Kontaktelementträger eine Feder angeordnet ist, welche das Kontaktelement radial oder axial gegen den jeweiligen Schleifring vorspannt. Hierdurch kann die Funktionssicherheit der Bürstenkommutierung verbessert werden.

Grundsätzlich können die im jeweiligen Schleifring benachbarten Segmente beliebig in der Umfangsrichtung aneinander grenzen. Bevorzugt ist eine Ausführungsform, bei der zumindest zwei in der Umfangsrichtung benachbarte Segmente in einer Ebene aneinander grenzen, welche die Rotationsachse des Rotors enthält. Hierdurch bauen die Segmente in der Umfangsrichtung relativ kurz. Alternativ kann es, beispielsweise um das Anfahren des Rotors bei axialer Kommutierung zu verbessern, zweckmäßig sein, dass zumindest zwei in der Umfangsrichtung benachbarte Segmente in einer Ebene aneinander grenzen, die gegenüber einer die Rotationsachse des Rotors enthaltenden Ebene geneigt ist und parallel zur Rotationsachse des Rotors verläuft. Alternativ kann es, beispielsweise um das Anfahren des Rotors bei radialer Kommutierung zu verbessern, zweckmäßig sein, dass zumindest zwei in der Umfangsrichtung benachbarte Segmente in einer Ebene aneinander grenzen, die gegenüber einer senkrecht zur Rotationsachse des Rotors verlaufenden Ebene geneigt ist und die Rotationsachse des Rotors schneidet. Die geneigten Grenzflächen bewirken gleichzeitig, dass die in der Umfangsrichtung gemessene Länge der Kontaktelemente reduziert werden kann, wodurch sich Herstellungstoleranzen weniger auswirken.

Ein erfindungsgemäßes Fahrzeugbauteil charakterisiert sich durch wenigstens ein Stellglied sowie einen Elektromotor der vorstehend beschriebenen Art, der mit dem jeweiligen Stellglied antriebsverbunden ist. Vorzugsweise handelt es sich beim Fahrzeugbauteil um eine Drosseleinrichtung einer Frischluftanlage oder um eine Klappeneinrichtung einer Frischluftanlage. Ebenso kann es sich beim Fahrzeugbauteil um eine Turbine bzw. um einen Abgasturbolader handeln, wobei das jeweilige Stellglied dann eine variable Turbinengeometrie oder ein Wastegate-Ventil sein kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Brennkraftmaschine mit mehreren Fahrzeugbauteilen,
- Fig. 2: ein stark vereinfachter Querschnitt eines Elektromotors,
- Fig. 3: ein stark vereinfachter Längsschnitt des Elektromotors,
- Fig. 4: ein weiterer, stark vereinfachter Längsschnitt des Elektromotors, bei einer anderen Ausführungsform,
- Fig. 5: eine isometrische Ansicht einer Bürstenkommutierung,
- Fig. 6: ein abgewickeltes Kommutierungsschema für eine dreisträngige Ausführung des Elektromotors,
- Fig. 7: eine vereinfachte Seitenansicht der Bürstenkommutierung bei einer anderen Ausführungsform,
- Fig. 8: eine isometrische Ansicht eines Schleifrings bei einer anderen Ausführungsform,
- Fig. 9: eine isometrische Ansicht eines Rotors bei der Ausführungsform gemäß Fig. 8,
- Fig. 10: eine isometrische Ansicht des Rotors mit einer Kontaktelementanordnung bei der Ausführungsform gemäß Fig. 8,
- Fig. 11: ein stark vereinfachter Querschnitt des Elektromotors bei der Ausführungsform gemäß Fig. 8,
- Fig. 12: ein Kommutierungsschema des Elektromotors der Ausführungsform gemäß Fig. 11 mit zugehörigem Abrollschema des Schleifrings (a), mit zugehörigem Kontaktdiagramm (b) für eine Kommutierungsperiode, mit zugehörigem Spulenkontaktschema (c) für die Kommutierungsperiode und mit einem Spulenverschaltungsschema (d),
- Fig. 13: eine isometrische Ansicht einer Schleifringanordnung bei axialer Kommutierung,
- Fig. 14: eine isometrische Ansicht der Schleifringanordnung aus Fig. 13, jedoch bei radialer Kommutierung,
- Fig. 15: ein Kommutierungsschema zu den Ausführungsformen der Fig. 13 und 14,
- Fig. 16: ein Kommutierungsschema zu den Ausführungsformen der Fig. 17 und 18,
- Fig. 17: eine isometrische Ansicht einer anderen Schleifringanordnung bei axialer Kommutierung,
- Fig. 18: eine isometrische Ansicht der anderen Schleifringanordnung aus Fig. 17, jedoch bei radialer Kommutierung,
- Fig. 19: eine isometrische Ansicht einer weiteren Schleifringanordnung bei axialer Kommutierung,
- Fig. 20: eine isometrische Ansicht der weiteren Schleifringanordnung aus Fig. 19, jedoch bei radialer Kommutierung,
- Fig. 21: ein Kommutierungsschema zu den Ausführungsformen der Fig. 19 und 20,
- Fig. 22 - 24: Kommutierungsschemata weiterer Ausführungsformen derartiger Schleifringanordnungen,
- Fig. 25: eine Gegenüberstellung von Abrollschemata eines segmentierten Schleifrings bei unterschiedlichen Segmentübergängen (a, b, c).

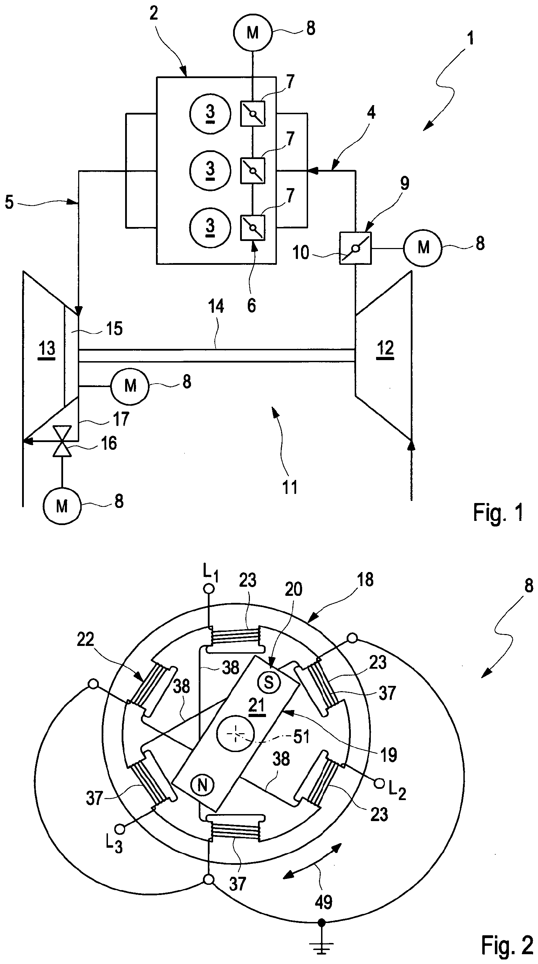

Entsprechend Figur 1 umfasst eine Brennkraftmaschine 1, die bevorzugt in einem Fahrzeug angeordnet ist, einen Motorblock 2 mit mehreren Brennräumen 3, eine Frischluftanlage 4 zur Versorgung der Brennräume 3 mit Frischluft und eine Abgasanlage 5 zum Abführen von Abgas von den Brennräumen 3. Am Motorblock 2 kann eine Klappenvorrichtung 6 angeordnet sein, die für jeden Brennraum 3 eine Klappe 7 umfasst, die beispielsweise als Tumble-Klappe oder als Drall-Klappe ausgestaltet sein kann. Die einzelnen Klappen 7 sind Stellglieder, die mit Hilfe eines Elektromotors 8 betätigt bzw. verstellt werden können. Die Frischluftanlage 4 enthält im Beispiel außerdem eine Drosselvorrichtung 9, deren Drosselklappe 10 mit Hilfe eines weiteren Elektromotors 8 verstellt werden kann.

Die Brennkraftmaschine 1 ist hier außerdem als aufgeladene Brennkraftmaschine 1 konzipiert. Im vorliegenden Fall ist die Brennkraftmaschine 1 hierzu mit einem Abgasturbolader 11 ausgestattet, der einen in die Frischluftanlage 4 eingebundenen Verdichter 12 und eine in die Abgasanlage 5 eingebundene Turbine 13 umfasst, die über eine gemeinsame Antriebswelle 14 miteinander verbunden sind. Die Turbine 13 kann mit einer variablen Turbinengeometrie 15 ausgestattet sein, mit deren Hilfe eine Anströmrichtung und eine Anströmgeschwindigkeit des Abgases bezüglich eines hier nicht dargestellten Turbinenrads der Turbine 13 verändert werden kann. Zum Betätigen der variablen Turbinengeometrie 15 kann wieder ein Elektromotor 8 vorgesehen sein. Die Turbine 13 ist hier außerdem mit einem Wastegate-Ventil 16 ausgestattet, mit dessen Hilfe ein Bypass 17 zur Umgehung des Turbinenrads gesteuert werden kann. Zur Betätigung des Wastegate-Ventils 16 kann wieder ein Elektromotor 8 vorgesehen sein.

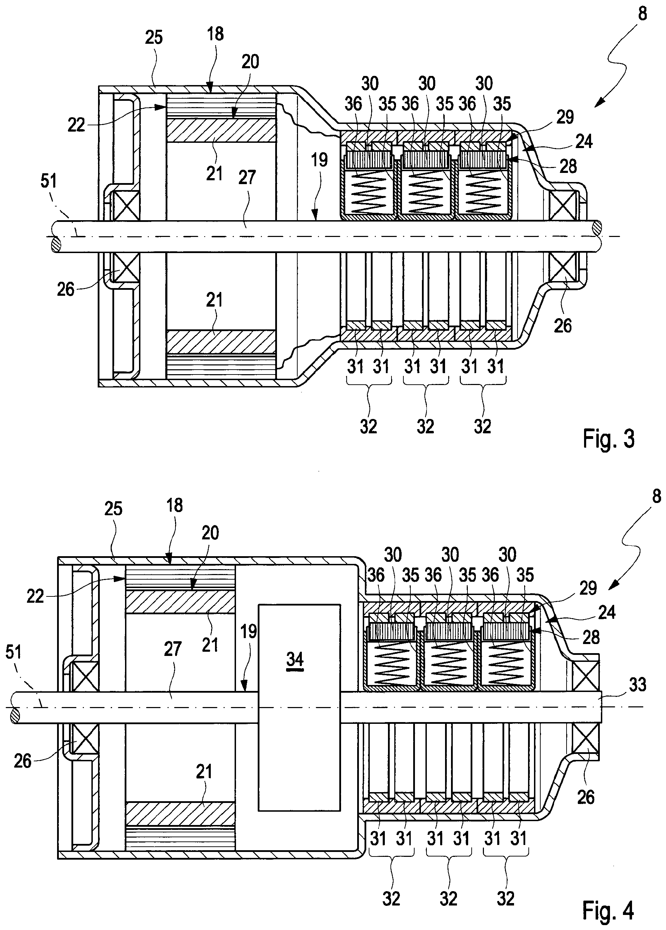

Gemäß den Figuren 2 bis 4 kann der Elektromotor 8 als Innenläufer ausgestaltet sein und dementsprechend einen außenliegenden Stator 18 und einen innenliegenden Rotor 19 aufweisen. Der Rotor 19 ist relativ zum Stator 18 um eine Rotationsachse 51 drehbar gelagert und ist mit einer fest daran angeordneten Magnetanordnung 20 versehen, die zumindest einen Permanentmagneten 21 umfasst. Der Stator 18 ist fest mit einer Spulenanordnung 22 ausgestattet, die zumindest eine elektrische Spule 23 umfasst. Bevorzugt handelt es sich beim Elektromotor 8 um einen Gleichstrommotor. Gemäß den Figuren 3 und 4 ist der Elektromotor 8 mit einer Kontaktkommutierung 24 ausgestattet, um die Spulenanordnung 22 ansteuern zu können.

Der Elektromotor 8 umfasst ferner ein Gehäuse 25, in dem der Stator 18 angeordnet ist und in dem der Rotor 19 drehbar gelagert ist. Entsprechende Lager sind hier mit 26 bezeichnet und an Stirnseiten des Gehäuses 25 angeordnet, derart, dass der Stator 18 und die Kontaktkommutierung 24 axial zwischen den beiden Lagern 26 angeordnet sind.

Der Rotor 19 umfasst eine Antriebswelle 27, über welche das jeweilige, mit Hilfe des Elektromotors 8 anzutreibende Stellglied mit dem Elektromotor 8 antriebsverbunden werden kann.

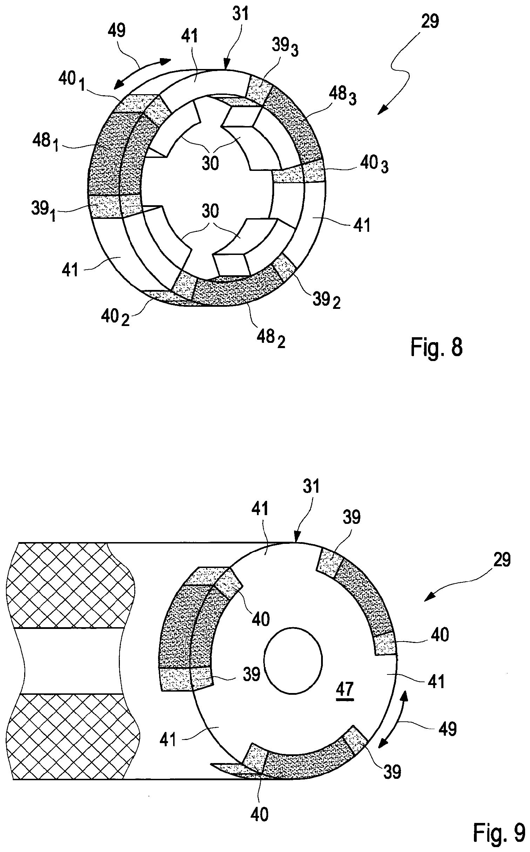

Gemäß den Figuren 3 bis 7 umfasst die Kontaktkommutierung 24 eine Kontaktelementanordnung 28 und eine Schleifringanordnung 29. Die Kontaktelementanordnung 28 ist mit dem Rotor 19 drehend angeordnet und umfasst zumindest ein Kontaktelement 30. Das jeweilige Kontaktelement 30 ist zweckmäßig eine Bürste, z.B. eine Kohlebürste. Die Schleifringanordnung 29 ist drehfest am Gehäuse 25 angeordnet und umfasst zumindest einen Schleifring 31. Im Beispiel der Fig. 8 bis 12 ist nur ein Schleifring 31 vorgesehen. Bei allen anderen Beispielen sind zwei oder mehr Schleifringe 31 vorgesehen. Die Schleifringanordnung 29 ist auf geeignete Weise elektrisch mit der Spulenanordnung 22 verbunden. In den Beispielen der Fig. 3 bis 7 definieren wenigstens zwei Schleifringe 31 jeweils eine Schleifringgruppe 32. Innerhalb der jeweiligen Schleifringgruppe 32 sind zumindest zwei Schleifringe 31 über wenigstens ein Kontaktelement 30 elektrisch miteinander verbunden.

Die Kontaktelemente 30 sind gegenüber dem Rotor 19 elektrisch isoliert. Die Schleifringe 31 sind gegenüber dem Gehäuse 25 elektrisch isoliert.

Wie sich den Figuren 3 und 4 entnehmen lässt, ist die Spulenanordnung 22 am bzw. im Gehäuse 25 axial versetzt zur Schleifringanordnung 29 angeordnet. Innerhalb des Gehäuses 25 sind dann auch die Magnetanordnung 20 und die Kontaktelementanordnung 28 axial versetzt zueinander angeordnet.

Bei der in Figur 3 gezeigten Ausführungsform ist ein durchgehender Rotor 19 bzw. eine durchgehende Antriebswelle 27 vorgesehen, so dass die Magnetanordnung 20 und die Kontaktelementanordnung 28 am gleichen Rotor 19 bzw. an der gleichen Antriebswelle 27 fest angeordnet sind. Im Unterschied dazu zeigt Figur 4 eine Ausführungsform, bei welcher zusätzlich zum Rotor 19 des Elektromotors 8 eine Kontaktelementwelle 33 vorgesehen ist, an der die Kontaktelementanordnung 28 fest angeordnet ist. Ein Getriebe 34 realisiert eine Antriebsverbindung mit Drehzahlüber- bzw. -untersetzung zwischen dem Rotor 19 des Elektromotors 8 und der Kontaktelementwelle 33.

Gemäß den Figuren 3 bis 5 ist innerhalb der Kontaktelementanordnung 28 das jeweilige Kontaktelement 30 über einen Kontaktelementträger 35 am Rotor 19 bzw. an der Kontaktelementwelle 33 angeordnet, wobei der jeweilige Kontaktelementträger 35 am Rotor 19 bzw. an der Kontaktelementwelle 33 fest angebracht ist. Der Kontaktelementträger 35 kann gemäß den Figuren 3 und 4 zweckmäßig eine Feder 36 enthalten, welche das Kontaktelement 30 radial nach außen gegen die zugehörigen Schleifringe 31 vorspannt.

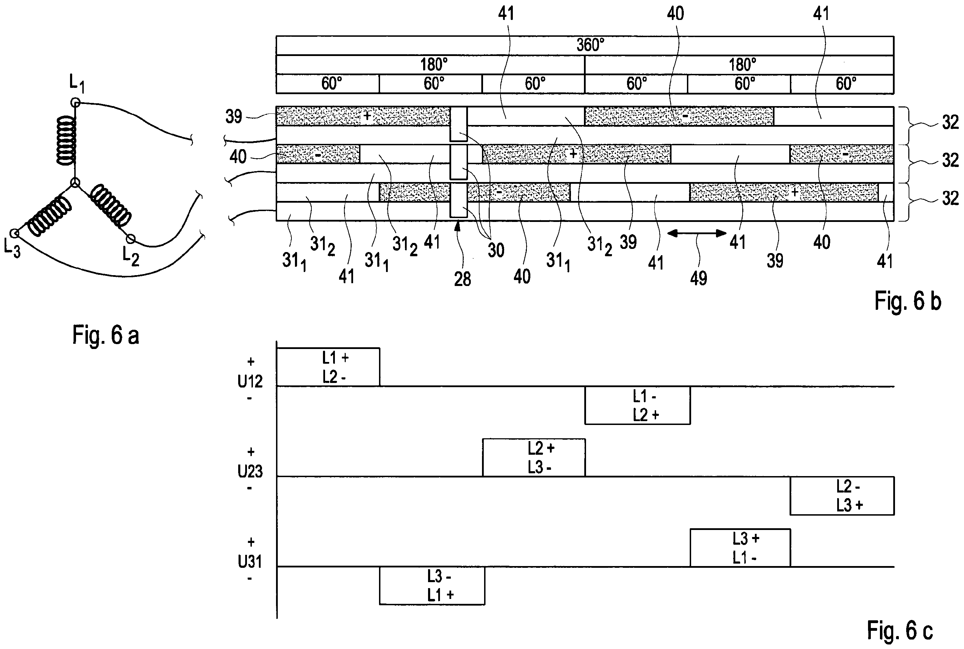

Gemäß Figur 2 kann eine Wicklung 37 entweder eine einzige Spule 23 oder zumindest zwei in Reihe geschaltete Spulen 23 bilden. Jedenfalls definiert die jeweilige Wicklung 37 einen Spulenstrang 38. Bei der in Figur 2 gezeigten Ausführungsform sind drei Spulenstränge 38 vorgesehen, in denen die jeweilige Wicklung 37 jeweils zwei diametral gegenüberliegende Spulen 23 bildet. Die drei separat ansteuerbaren Spulenstränge 38 oder Spulenpaare sind in den Figuren 2 und 6 außerdem mit L₁, L₂ und L₃ bezeichnet.

Entsprechend Figur 6 kann nun je Spulenstrang L₁, L₂, L₃ eine separate Schleifringgruppe 32 vorgesehen sein. Jeder Spulenstrang L₁, L₂, L₃ ist dann nur mit einer Schleifringgruppe 32 verbunden.

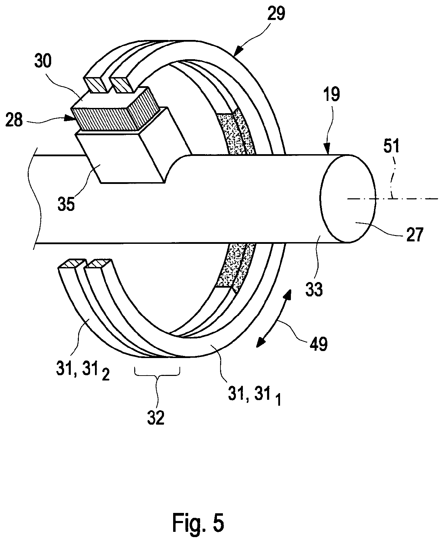

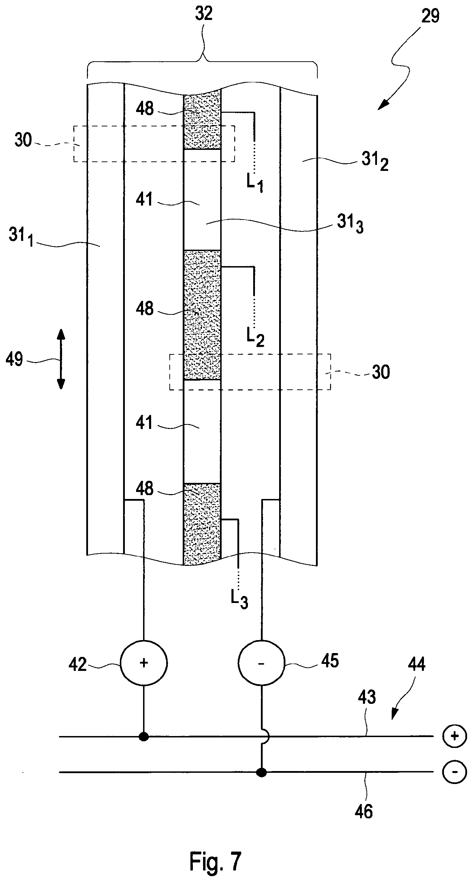

Gemäß den Figuren 5 und 6 umfasst jede Schleifringgruppe 32 genau zwei Schleifringe 31, nämlich jeweils einen ersten Schleifring 31₁ und einen zweiten Schleifring 31₂. Der jeweilige erste Schleifring 31₁ ist mit der Spulenanordnung 22 bzw. mit dem zugehörigen Spulenstrang 38 bzw. L₁, L₂ oder L₃ elektrisch verbunden. Der jeweilige zweite Schleifring 31₂ ist in der Umfangsrichtung 49 segmentiert und umfasst zumindest ein Pluspol-Segment 39, zumindest ein Minuspol-Segment 40 und wenigstens zwei Isolator-Segmente 41. Das jeweilige Pluspol-Segment 39 ist mit einem in Figur 7 dargestellten Pluspol-Anschluss 42 des Elektromotors 8 elektrisch verbunden, der an einen Pluspol 43 einer elektrischen Stromversorgung 44 des Elektromotors 8 anschließbar ist. Das jeweilige Minuspol-Segment 40 ist dagegen mit einem in Figur 7 angedeuteten MinuspolAnschluss 45 des Elektromotors 8 elektrisch verbunden, der an einen Minuspol 46 der Stromversorgung 44 anschließbar ist. Das jeweilige Isolator-Segment 41 ist elektrisch isolierend ausgestaltet und ist in der Umfangsrichtung 49 jeweils zwischen einem Pluspol-Segment 39 und einem Minuspol-Segment 40 angeordnet.

Wie sich den Figuren 5 und 6 weiter entnehmen lässt, können nun die beiden Schleifringe 31₁ und 31₂ der jeweiligen Schleifringgruppe 32 bzw. des jeweiligen Schleifringpaars 32 mit Hilfe wenigstens eines Kontaktelements 30 elektrisch miteinander verbunden werden. Bei drei Schleifringpaaren 32 sind dementsprechend zumindest drei Kontaktelemente 30 innerhalb der Kontaktelementanordnung 28 vorgesehen.

Gemäß Figur 2 definieren innerhalb der Magnetanordnung 20 je ein magnetischer Nordpol N und ein magnetischer Südpol S ein magnetisches Polpaar. Die Anzahl der Pluspol-Segmente 39 und die Anzahl der Minuspol-Segmente 40 ist bei der in Figur 6 gezeigten Ausführungsform gleich der Anzahl der magnetischen Polpaare. Im hier gezeigten Beispiel wird somit ein Elektromotor 8 gezeigt, der ein einziges magnetisches Polpaar besitzt und eine dreisträngige Spulenanordnung 22 aufweist.

In der Abwicklung der Figur 6 ist außerdem noch die variierende Polung der Spulenstränge L₁, L₂, L₃ sowie die Rotation des dadurch erzeugten Magnetfeldes dargestellt, die dadurch entsteht, dass die Kontaktelementanordnung 28 gegenüber der Schleifringanordnung 29 rotiert und dabei die aufeinanderfolgenden unterschiedlichen Segmente 39, 40, 41 des jeweiligen zweiten Schleifrings 31₂ überfährt und mit dem jeweiligen ersten Schleifring 31₁ elektrisch verbindet.

Figur 7 zeigt nun eine alternative Ausführungsform, bei welcher die jeweilige Schleifringgruppe 32 genau drei Schleifringe 31 umfasst, nämlich einen ersten Schleifring 31₁, einen zweiten Schleifring 31₂ sowie einen axial zwischen dem ersten Schleifring 31₁ und dem zweiten Schleifring 31₂ angeordneten dritten Schleifring 31₃. Der erste Schleifring 31₁ ist an den Pluspol-Anschluss 42 des Elektromotors 8 angeschlossen. Der zweite Schleifring 31₂ ist an den Minuspol-Anschluss 45 des Elektromotors 8 angeschlossen. Der dritte Schleifring 31₃ ist in der Umfangsrichtung 49 segmentiert, derart, dass er mehrere Isolator-Segmente 41 und mehrere Spulen-Segmente 48 umfasst. Die Spulen-Segmente 48 und die Isolator-Segmente 41 wechseln sich in der Umfangsrichtung 49 ab. Die Isolator-Segmente 41 sind elektrisch isolierend ausgestaltet. Die Spulen-Segmente 48 sind elektrisch mit der Spulenanordnung 22 verbunden. Insbesondere sind die Spulen-Segmente 48 einander abwechselnd mit den unterschiedlichen Spulensträngen L₁, L₂, L₃ elektrisch verbunden.

Zumindest ein erstes Kontaktelement 30, das in Figur 7 nur mit unterbrochener Linie angedeutet ist, verbindet den ersten Schleifring 31₁ mit dem dritten Schleifring 31₃ elektrisch. Zumindest ein zweites Kontaktelement 30, das in Figur 7 mit unterbrochener Linie angedeutet ist, verbindet elektrisch den zweiten Schleifring 31₂ mit dem dritten Schleifring 31₃.

Durch eine geeignete Anzahl an Leitersegmenten 48 können bei dieser Ausführungsform sämtliche Spulenstränge 38 bzw. L₁, L₂, L₃ mit dieser einen Schleifringgruppe 32 angesteuert werden, so dass die Schleifringanordnung 29 nur diese drei Schleifringe 31 umfasst.

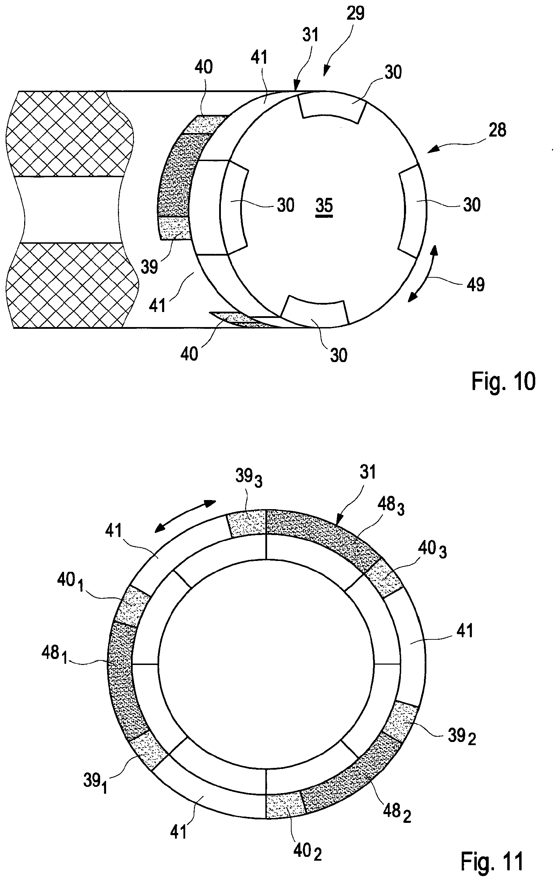

Bei den in den Fig. 8 bis 12 gezeigten Ausführungsformen weist die Schleifringanordnung 29 nur einen einzigen, gemeinsamen Schleifring 31 auf, der in der Umfangsrichtung 49 segmentiert ist. Der Schleifring 31 weist zumindest ein Pluspol-Segment 39, das mit dem an den Pluspol 43 der Stromversorgung 44 des Elektromotors 8 anschließbaren Pluspol-Anschluss 42 des Elektromotors 8 elektrisch verbunden ist, zumindest ein Minuspol-Segment 40, das mit dem an den Minuspol 46 der Stromversorgung 44 anschließbaren Minuspol-Anschluss 45 des Elektromotors 8 elektrisch verbunden ist, zumindest ein Spulen-Segment 48, das mit der Spulenanordnung 22 elektrisch verbunden ist, und zumindest ein elektrisch isolierendes Isolator-Segment 41 auf. Die verschiedenen Segmente 39, 40, 41, 48 folgen in der Umfangsrichtung 49 so aufeinander, dass je ein Spulen-Segment 48 zwischen einem Pluspol-Segment 39 und einem Minuspol-Segment 40 angeordnet ist und je ein Isolator-Segment 41 zwischen einem Pluspol-Segment 39 und einem Minuspol-Segment 40 angeordnet ist. Durch die Verwendung nur eines einzigen, gemeinsamen Schleifrings 31 ergibt sich in axialer Richtung ein extrem kompakter Aufbau für die Kontaktkommutierung. Die Kontaktkommutierung kann grundsätzlich gemäß Fig. 8 wieder über radial innen angeordnete Kontaktelemente 30 erfolgen oder aber gemäß Fig. 10 über axial angeordnete Kontaktelemente 30.

Auch hier sind die Pluspol-Segmente 39 und die Minuspol-Segmente 40 gegenüber dem jeweiligen Spulen-Segment 48 elektrisch isoliert.

Bei einer vorteilhaften Weiterbildung kann nun vorgesehen sein, dass innerhalb der Spulenanordnung 22 eine Wicklung 37, die eine einzige Spule 23 oder mehrere, in Reihe geschaltete Spulen 23 bildet, einen Spulenstrang 38 definiert, wobei die Spulenanordnung 22 mehrere Spulenstränge 38 aufweist. Der gemeinsame Schleifring 31 weist im Beispiel mehrere Spulen-Segmente 48 auf, wobei jedes Spulen-Segment 48 nur mit einem Spulenstrang 38 elektrisch verbunden ist, während jeder Spulenstrang 38 mit mindestens einem Spulen-Segment 48 elektrisch verbunden ist. Somit lassen sich über den gemeinsamen Schleifring 31 mehrere Spulen 23 bzw. mehrere Spulenstränge 38 kommutieren. Im Beispiel sind drei Spulenstränge 38 vorgesehen, die mittels drei Spulen-Segmenten 48₁, 48₂, 48₃ kommutiert werden. Dementsprechend sind hier auch drei Pluspol-Segmente 39₁, 39₂, 39₃ und drei Minuspol-Segmente 40₁, 40₂, 40₃ vorgesehen.

Gemäß den Fig. 9 und 10 kann die Schleifringanordnung 29 in das Gehäuse 25 bzw. in eine axiale Stirnseite 47 des Gehäuses 25 integriert sein. Im Beispiel sind hierzu die Isolator-Segmente 41 integral am Gehäuse 25 ausgeformt. Hierzu muss das Gehäuse 25 aus einem elektrisch isolierenden Material hergestellt sein, z.B. aus Kunststoff.

Gemäß Fig. 10 kann die Kontaktelementanordnung 28 einen scheibenförmigen Kontaktelementträger 35 aufweisen, in den die einzelnen Kontaktelemente 30 integriert sind.

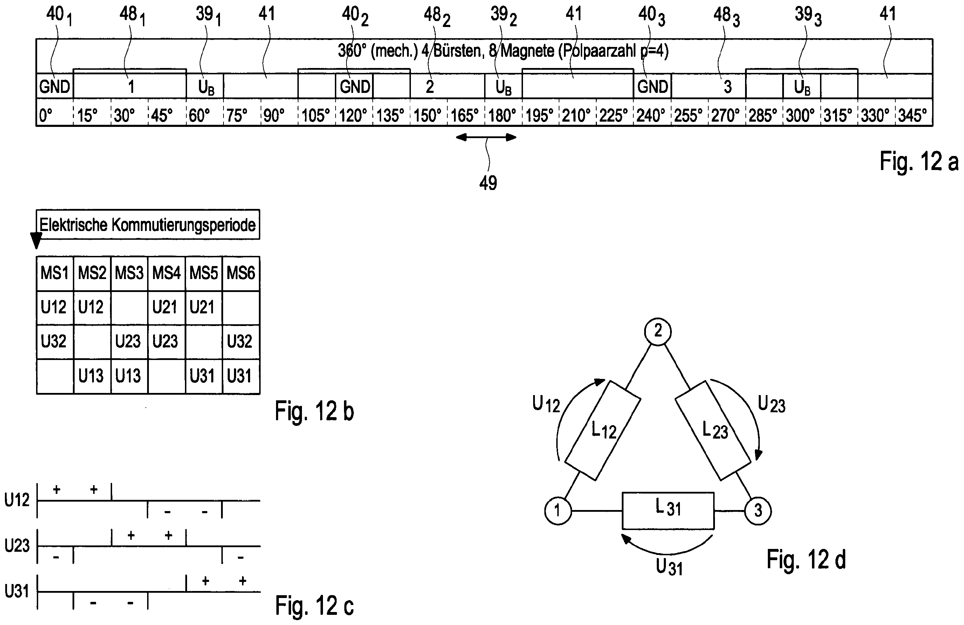

Das Beispiel der Fig. 8 bis 12 geht von einem Elektromotor 8 aus, dessen Rotor 19 acht Permanentmagnete 21 und somit eine Polpaarzahl von vier besitzt. Weiter sind drei Spulenstränge 38 vorgesehen, die mit vier Kontaktelementen 30 kommutiert werden. Das Kommmutierungsschema gemäß den Fig. 12a, 12b, 12c ist in Verbindung mit der Verschaltung gemäß Fig. 12d analog zum Kommuntierungsschema der Fig. 6a, 6b und 6c zu verstehen und insoweit selbsterklärend.

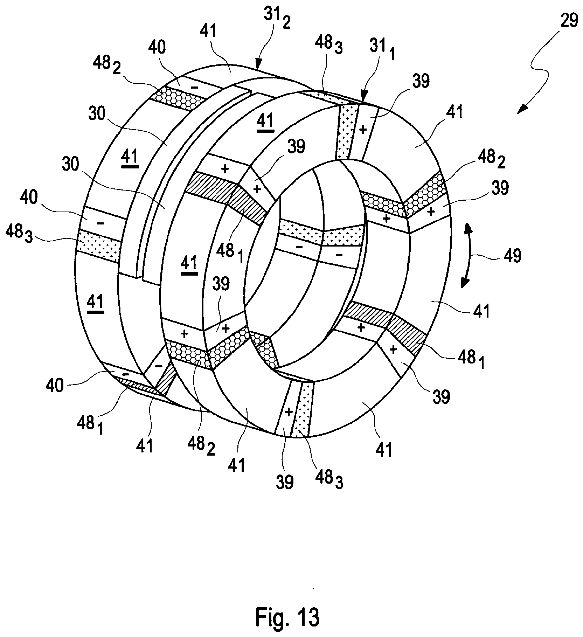

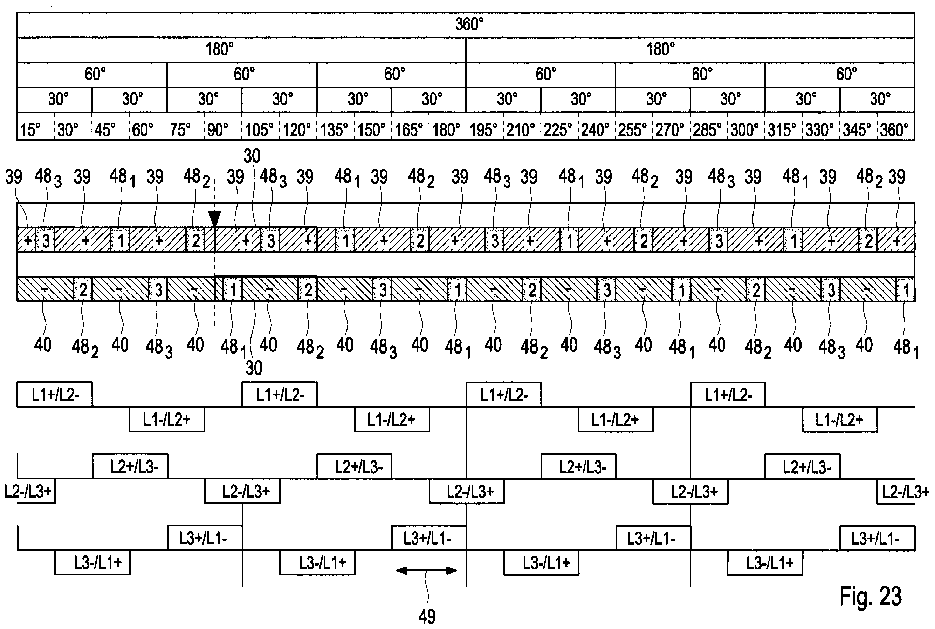

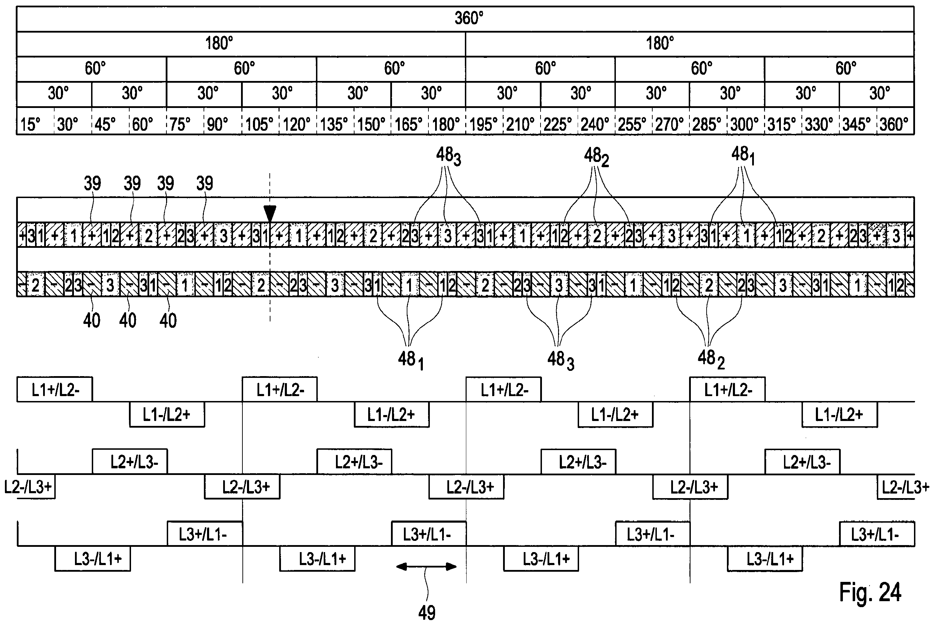

Bei den Ausführungsformen der Fig. 13 bis 24 kann vorgesehen sein, dass innerhalb der Spulenanordnung 22 eine Wicklung 37, die eine einzige Spule 23 oder mehrere, in Reihe geschaltete Spulen 23 bildet, einen Spulenstrang 38 definiert, wobei die Spulenanordnung 29 wieder mehrere Spulenstränge 38 aufweist. Die Schleifringanordnung 29 weist in diesem Fall genau zwei Schleifringe 31₁, 31₂ auf. Ein erster Schleifring 31₁ ist in der Umfangsrichtung 49 segmentiert und weist mehrere Pluspol-Segmente 39, die jeweils mit dem an den Pluspol 43 der Stromversorgung 44 des Elektromotors 8 anschließbaren Pluspol-Anschluss 42 des Elektromotors 8 elektrisch verbunden sind, und je Spulenstrang 38 wenigstens ein Spulen-Segment 48 auf, das mit dem jeweiligen Spulenstrang 38 elektrisch verbunden ist, wobei die verschiedenen Segmente 39, 48 in der Umfangsrichtung 49 gegeneinander elektrisch isoliert sind. Des Weiteren ist ein zweiter Schleifring 31₂ in der Umfangsrichtung 49 segmentiert und weist mehrere Minuspol-Segmente 40, die jeweils mit dem an den Minuspol 46 der Stromversorgung 44 anschließbaren Minuspol-Anschluss 45 des Elektromotors 8 elektrisch verbunden sind, und je Spulenstrang 38 wenigstens ein Spulen-Segment 48 auf, das mit dem jeweiligen Spulenstrang 38 elektrisch verbunden ist. Auch hier sind die verschiedenen Segmente 40, 48 in der Umfangsrichtung 49 gegeneinander elektrisch isoliert. In den Beispielen der Fig. 13 bis 24 sind jeweils genau drei Spulenstränge 38 vorgesehen, wobei der erste Schleifring 31₁ und der zweite Schleifring 31₂ je Spulenstrang 38 zwei zugehörige Spulen-Segmente 48 besitzen, so dass insgesamt sechs Spulen-Segmente 48 vorhanden sind, nämlich zwei erste Spulen-Segmente 48₁, zwei zweite Spulen-Segmente 48₂ und zwei dritte Spulen-Segmente 48₃.

Entsprechend vorteilhafter Weiterbildungen können gemäß den Fig. 13 bis 21 im ersten Schleifring 31₁ die verschiedenen Segmente 39, 48 in der Umfangsrichtung 49 so aufeinanderfolgen, dass zumindest ein Spulen-Segment 48 zwischen zwei Pluspol-Segmenten 39 angeordnet ist, während im zweiten Schleifring 31₂ die verschiedenen Segmente 40, 48 in der Umfangsrichtung 49 so aufeinanderfolgen können, dass zumindest ein Spulen-Segment 48 zwischen zwei Minuspol-Segmenten 40 angeordnet ist. Hierdurch wird eine sichere Kommutierung unterstützt.

Zusätzlich kann gemäß den Ausführungsformen der Fig. 13 bis 15 vorgesehen sein, dass der erste Schleifring 31₁ für jedes Spulen-Segment 48 ein elektrisch isolierendes Isolator-Segment 41 aufweist, wobei die verschiedenen Segmente 39, 41 und 48 in der Umfangsrichtung 49 so aufeinanderfolgen, dass jedes Spulen-Segment 48 einerseits an ein Isolator-Segment 41 und andererseits an ein Pluspol-Segment 39 angrenzt. Analog dazu kann vorgesehen sein, dass der zweite Schleifring 31₂ für jedes Spulen-Segment 48 ein elektrisch isolierendes Isolator-Segment 41 aufweist, wobei die verschiedenen Segmente 40, 41, 48 in der Umfangsrichtung 49 so aufeinanderfolgen, dass jedes Spulen-Segment 48 einerseits an ein Isolator-Segment 41 und andererseits an ein Minuspol-Segment 40 angrenzt.

Ferner kann vorgesehen sein, dass das jeweilige Isolator-Segment 41 in der Umfangsrichtung 49 größer ist als das jeweilige Pluspol-Segment 39 und/oder als das jeweilige Minuspol-Segment 40 und/oder als das jeweilige Spulen-Segment 48. Zusätzlich oder alternativ kann vorgesehen sein, dass das jeweilige Spulen-Segment 48 in der Umfangsrichtung 49 gleich groß ist wie das jeweilige Pluspol-Segment 39 und/oder wie das jeweilige Minuspol-Segment 40.

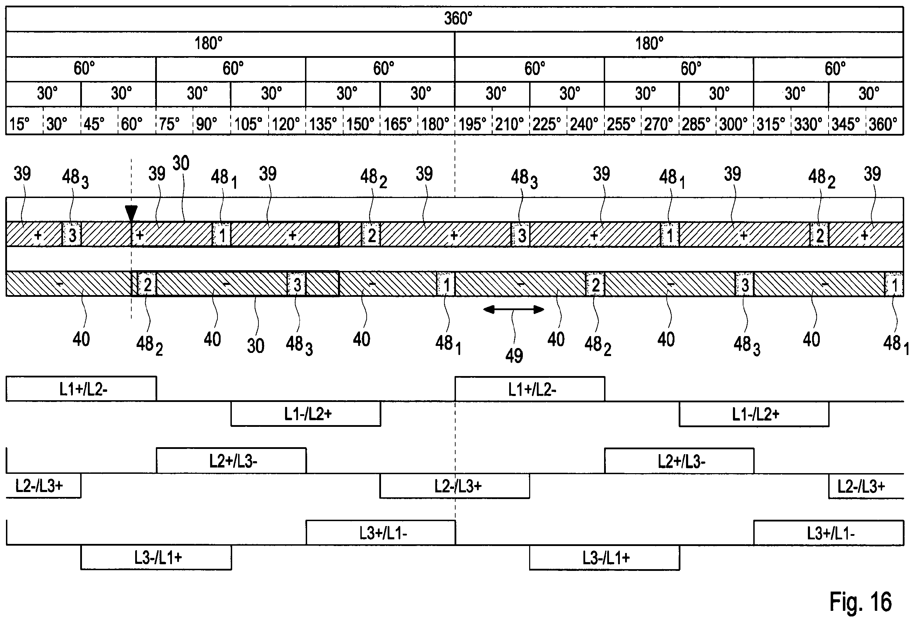

Eine andere Ausführungsform schlägt gemäß den Fig. 16 bis 21 vor, dass im ersten Schleifring 31₁ jedes Spulen-Segment 48 in der Umfangsrichtung 49 beiderseits an ein Pluspol-Segment 39 angrenzt, während im zweiten Schleifring 31₂ jedes Spulen-Segment 48 in der Umfangsrichtung 49 beiderseits an ein Minuspol-Segment 40 angrenzt.

Entsprechend einer Weiterbildung kann insbesondere gemäß den Fig. 16 bis 18 vorgesehen sein, dass das jeweilige Spulen-Segment 48 in der Umfangsrichtung 49 kleiner ist als das jeweilige Pluspol-Segment 39 und/oder als das jeweilige Minuspol-Segment 40.

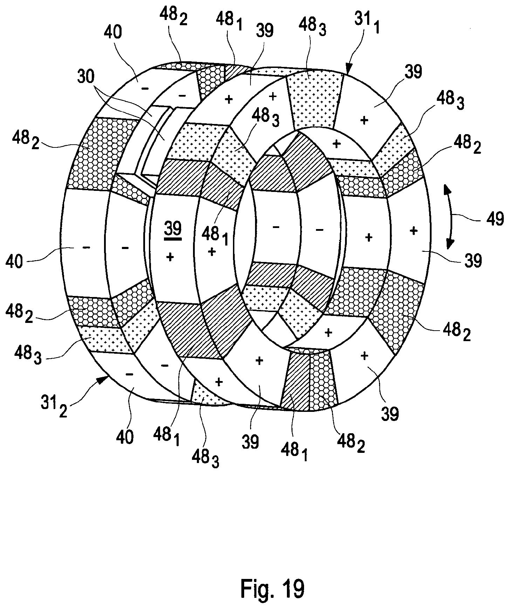

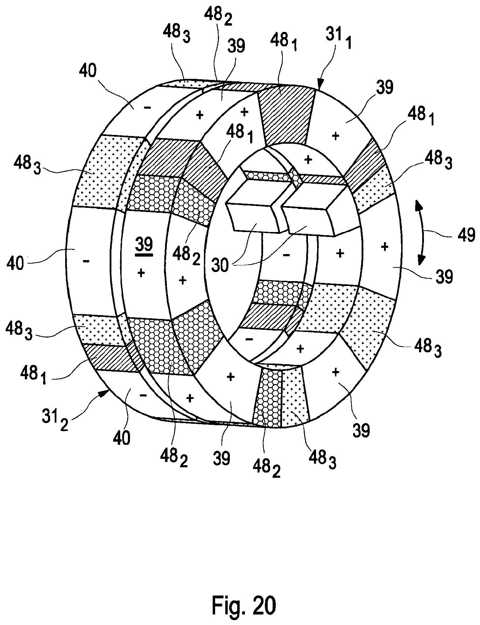

Gemäß einer anderen Ausführungsform kann insbesondere gemäß den Fig. 19 und 20 vorgesehen sein, dass im ersten Schleifring 31₁ jedem Spulenstrang 38 mehrere Spulen-Segmente 48 zugeordnet sind, die in der Umfangsrichtung 49 aufeinanderfolgen und nur durch Pluspol-Segmente 39 voneinander getrennt sind, wobei im zweiten Schleifring 31₂ jedem Spulenstrang 38 mehrere Spulen-Segmente 48 zugeordnet sind, die in der Umfangsrichtung 49 aufeinanderfolgen und nur durch Minuspol-Segmente 40 voneinander getrennt sind.

Gemäß einer bevorzugten Weiterbildung kann insbesondere gemäß den Fig. 19 und 20 vorgesehen sein, dass zumindest eines der Spulen-Segmente 48, das einem der Spulenstränge 38 zugeordnet ist, in der Umfangsrichtung 49 an ein anderes Spulen-Segment 48 angrenzt, das einem anderen Spulenstrang 38 zugeordnet ist. Die aneinander angrenzenden Spulen-Segmente 48 sind dabei zweckmäßig gegeneinander elektrisch isoliert.

Besonders vorteilhaft ist eine Weiterbildung gemäß den Fig. 19 und 20, bei welcher Spulen-Segmente 48, die in der Umfangsrichtung 49 beiderseits an Pluspol-Segmente 39 angrenzen, in der Umfangsrichtung 49 gleich groß sind wie die Pluspol-Segmente 39, während Spulen-Segmente 48, die in der Umfangsrichtung 49 an ein anderes Spulen-Segment 48 angrenzen, halb so groß sind wie die Pluspol-Segmente 39, wobei Spulen-Segmente 48, die in der Umfangsrichtung 49 beiderseits an Minuspol-Segmente 40 angrenzen, in der Umfangsrichtung 49 gleich groß sind wie die Minuspol-Segmente 40, während Spulen-Segmente 48, die in der Umfangsrichtung 49 an ein anderes Spulen-Segment 48 angrenzen, halb so groß sind wie die Minuspol-Segmente 40.

Vorteilhaft können die beiden Schleifringe 31₁, 31₂ relativ zueinander so angeordnet sein, dass die Spulen-Segmente 48 des ersten Schleifrings 31₁ gegenüber den Spulen-Segmenten 48 des zweiten Schleifrings 31₂ hinsichtlich der ihnen zugeordneten Spulenstränge 38 in der Umfangsrichtung 49 versetzt angeordnet sind.

Die Spulen-Segmente 48, die jeweils demselben Spulenstrang 38 zugeordnet sind, sind in den Figuren gleich schraffiert bzw. graphisch gleich gestaltet. Die Spulen-Segmente 48, die verschiedenen Spulensträngen 38 zugeordnet sind, sind in den Figuren auch unterschiedlich schraffiert bzw. graphisch unterschiedlich gestaltet.

Ferner kann gemäß den Fig. 13, 17 und 19 vorgesehen sein, dass die Kontaktelemente 30, die mit dem jeweiligen Schleifring 31₁, 31₂ in Kontakt stehen, axial zwischen den beiden Schleifringen 31₁, 31₂ angeordnet sind, wodurch die Kontaktkommutierung in der Radialrichtung sehr klein baut.

Gemäß einer vorteilhaften Weiterbildung kann dabei vorgesehen sein, dass ein mit dem ersten Schleifring 31₁ kontaktiertes erstes Kontaktelement 30 zu einem mit dem zweiten Schleifring 31₂ kontaktierten zweiten Kontaktelement 30 axial benachbart und davon elektrisch isoliert angeordnet ist.

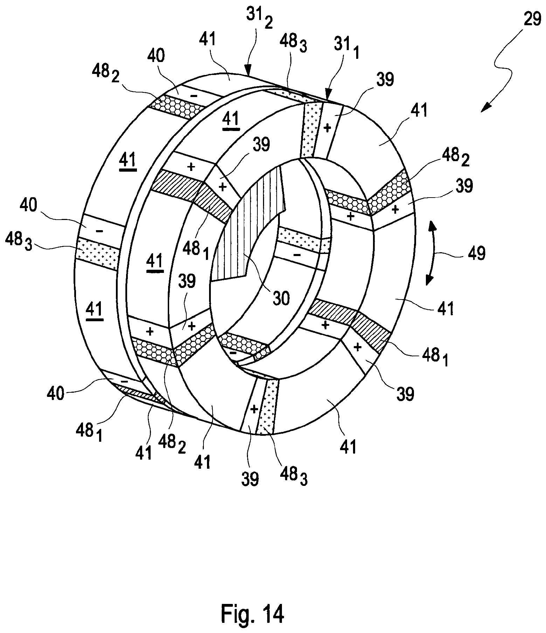

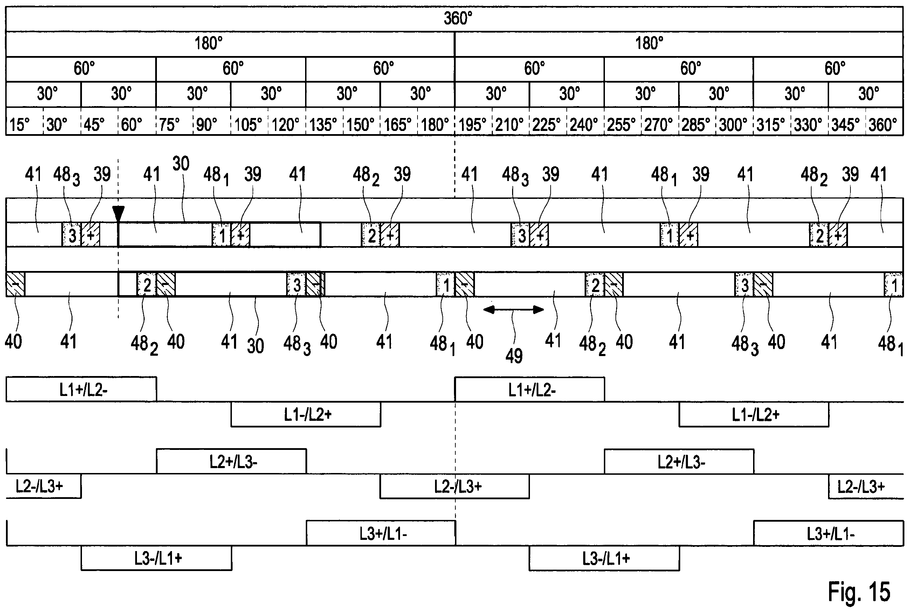

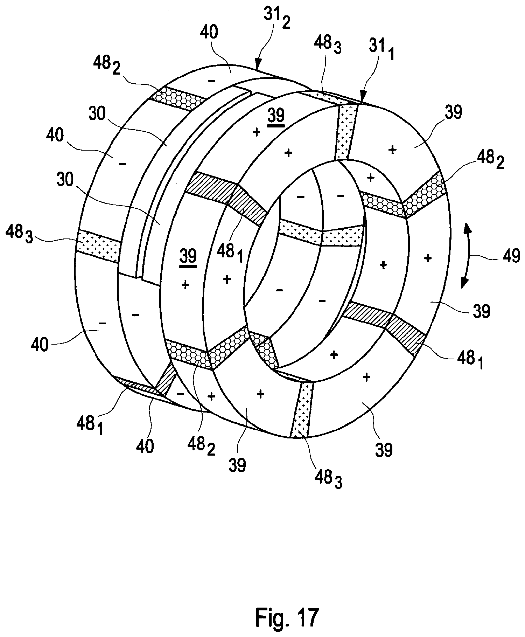

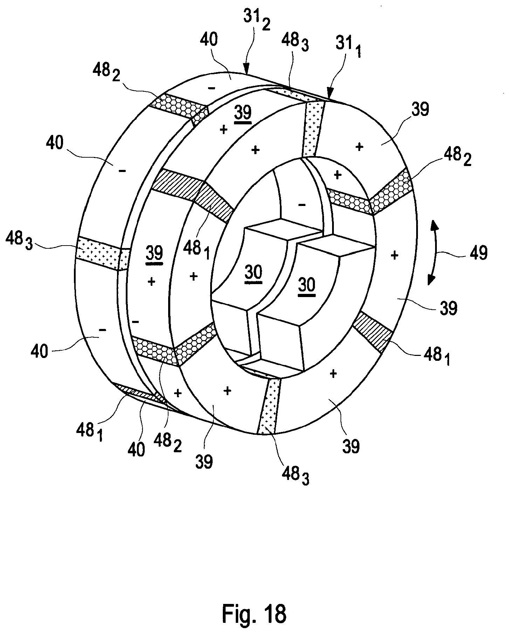

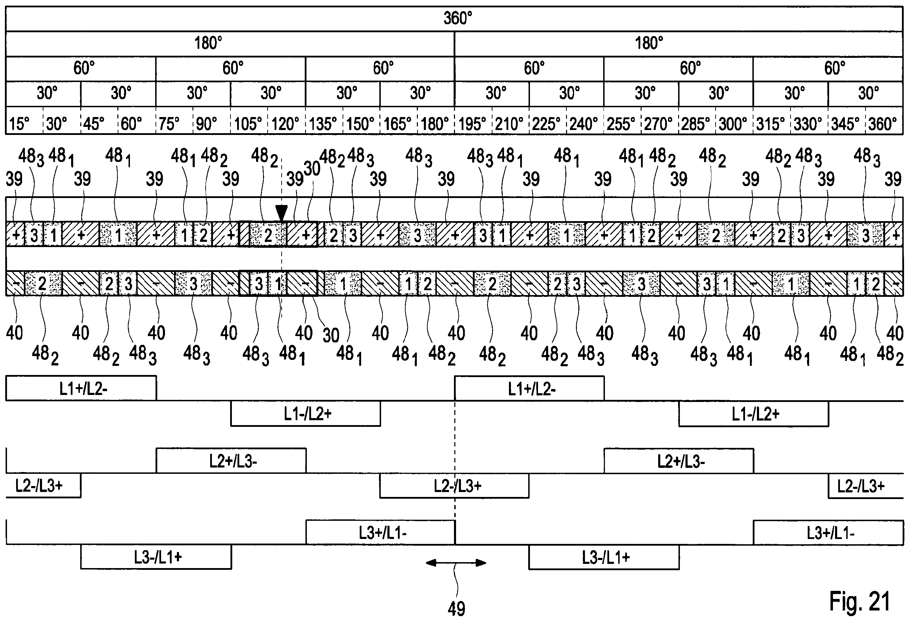

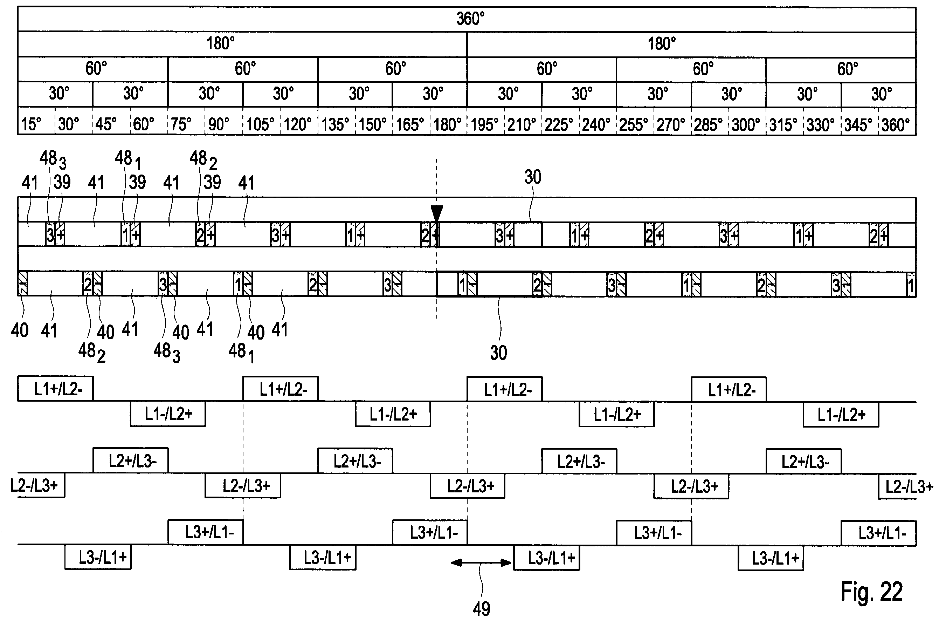

Fig. 15 zeigt das Abrollschema der Kommutierung für die Schleifringanordnung 29 der Fig. 13 und 14. Fig. 16 zeigt das Abrollschema der Kommutierung für die Schleifringanordnung 29 der Fig. 17 und 18. Fig. 21 zeigt das Abrollschema der Kommutierung für die Schleifringanordnung 29 der Fig. 19 und 20. Fig. 22 bis 24 zeigen weitere Abrollschemata der Kommutierung für modifizierte Schleifringanordnungen 29, die sich durch andere Anzahl und/oder Verteilung der verschiedenen Segmente voneinander unterscheiden.

Grundsätzlich können die im jeweiligen Schleifring 31 benachbarten Segmente 39, 40, 41, 48 beliebig in der Umfangsrichtung 49 aneinander grenzen. Bevorzugt sind gemäß den Fig. 5, 7 bis 24 und 25a Ausführungsformen, bei denen zumindest zwei in der Umfangsrichtung 49 benachbarte Segmente 39, 40, 41, 48 in einer Ebene 50 aneinander grenzen, welche die Rotationsachse 51 des Rotors 19 enthält. Hierdurch bauen die Segmente 39, 40, 41, 48 in der Umfangsrichtung 49 relativ kurz.

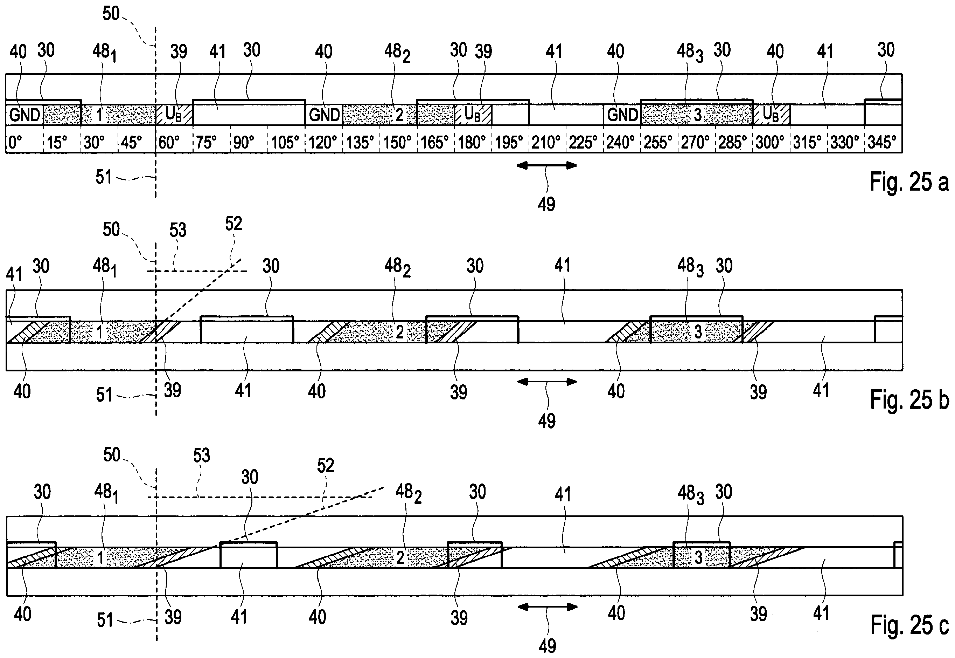

In Fig. 25 sind für eine Ausführungsform, bei der die Schleifringanordnung 29 wie in den Beispielen der Fig. 8 bis 12 nur einen einzigen Schleifring 31 umfasst, neben der vorstehend genannten, bevorzugten Variante zwei weitere Varianten in drei Teilfiguren a, b, c untereinander dargestellt, und zwar in Form des jeweils zugehörigen Abrollschemas der Kommutierung. Die Ebene 50, in der die benachbarten Segmente 39, 40, 41, 48 bei der in Fig. 25a gezeigten Variante aneinandergrenzen, enthält - wie erläutert - die Rotationsachse 51. Gemäß den Alternativen der Fig. 25b und 25c kann es bei der angedeuteten radialen Kommutierung zweckmäßig sein, dass zumindest zwei in der Umfangsrichtung 49 benachbarte Segmente 39, 40, 41, 48 in einer Ebene 52 aneinander grenzen, die gegenüber einer senkrecht zur Rotationsachse 51 des Rotors 19 verlaufenden Ebene 53 geneigt ist und die Rotationsachse 51 des Rotors 19 schneidet. Bei axialer Kommutierung, die kann dagegen vorgesehen sein, dass zumindest zwei in der Umfangsrichtung 49 benachbarte Segmente 39, 40, 41, 48 in einer Ebene aneinander grenzen, die gegenüber der die Rotationsachse 51 des Rotors 19 enthaltenden Ebene 50 geneigt ist und parallel zur Rotationsachse 51 des Rotors 19 verläuft.

## Patentansprüche

1. Elektromotor mit Kontaktkommutierung (24) und mit einem außenliegenden Stator (18) sowie mit einem innenliegenden, drehbar gelagerten Rotor (19),
- wobei eine Magnetanordnung (20) mit mindestens einem Permanentmagneten (21) fest am Rotor (19) und eine Spulenanordnung (22) mit wenigstens einer elektrischen Spule (23) fest am Stator (18) angeordnet sind,
- wobei die Kontaktkommutierung (24) eine vom Rotor (19) drehend angetriebene Kontaktelementanordnung (28) mit wenigstens einem Kontaktelement (30) und eine relativ zum Stator (18) drehfest angeordnete und mit der Spulenanordnung (22) elektrisch verbundene Schleifringanordnung (29) mit wenigstens einem Schleifring (31) aufweist,
- wobei die Schleifringanordnung (22) mehrere Schleifringe (31) aufweist,
- wobei jeweils mindestens zwei solche Schleifringe (31) eine Schleifringgruppe (32) bilden und über wenigstens ein solches Kontaktelement (30) elektrisch miteinander verbunden sind,
**dadurch gekennzeichnet,**
- **dass** die jeweilige Schleifringgruppe (32) nur zwei Schleifringe (31) umfasst, die ein Schleifringpaar (32) definieren,
- **dass** das jeweilige Schleifringpaar (32) einen ersten Schleifring (31₁) und einen zweiten Schleifring (31₂) umfasst,
- **dass** der erste Schleifring (31₁) mit der Spulenanordnung (22) oder mit dem zugehörigen Spulenstrang (38) elektrisch verbunden ist,
- **dass** der zweite Schleifring (31₂) in der Umfangsrichtung (49) segmentiert ist und zumindest ein Pluspol-Segment (39), das mit einem an einen Pluspol (43) einer Stromversorgung (44) des Elektromotors (8) anschließbaren Pluspol-Anschluss (42) des Elektromotors (8) elektrisch verbunden ist, zumindest ein Minuspol-Segment (40), das mit einem an einen Minuspol (46) der Stromversorgung (44) anschließbaren Minuspol-Anschluss (45) des Elektromotors (8) elektrisch verbunden ist, und wenigstens zwei Isolator-Segmente (41) aufweist, die in der Umfangsrichtung (49) jeweils zwischen einem Pluspol-Segment (39) und einem Minuspol-Segment (40) angeordnet sind.

2. Elektromotor nach Anspruch 1,
**dadurch gekennzeichnet,**
- **dass** innerhalb der Magnetanordnung (20) je ein magnetischer Nordpol (N) und ein magnetischer Südpol (S) ein magnetisches Polpaar definieren,
- **dass** die Anzahl der Pluspol-Segmente (39) und die Anzahl der Minuspol-Segmente (40) gleich der Anzahl der magnetischen Polpaare sind.

3. Elektromotor nach Anspruch 1,
**dadurch gekennzeichnet,**
- **dass** innerhalb der Spulenanordnung (22) eine Wicklung (37), die eine einzige Spule (23) oder mehrere, in Reihe geschaltete Spulen (23) bildet, einen Spulenstrang (38) definiert,
- **dass** die Spulenanordnung (22) mehrere Spulenstränge (38) aufweist,
- **dass** die Schleifringanordnung (29) genau zwei Schleifringe (31) aufweist,
- **dass** ein erster Schleifring (31₁) in der Umfangsrichtung (49) segmentiert ist und mehrere Pluspol-Segmente (39), die jeweils mit einem an einen Pluspol (43) einer Stromversorgung (44) des Elektromotors (8) anschließbaren Pluspol-Anschluss (42) des Elektromotors (8) elektrisch verbunden sind, und je Spulenstrang (38) wenigstens ein Spulen-Segment (48) aufweist, das mit dem jeweiligen Spulenstrang (38) elektrisch verbunden ist, wobei die verschiedenen Segmente (39, 48) in der Umfangsrichtung (49) gegeneinander elektrisch isoliert sind,
- **dass** ein zweiter Schleifring (31₂) in der Umfangsrichtung (49) segmentiert ist und mehrere Minuspol-Segmente (40), die jeweils mit einem an einen Minuspol (46) der Stromversorgung (44) anschließbaren Minuspol-Anschluss (45) des Elektromotors (8) elektrisch verbunden sind, und je Spulenstrang (38) wenigstens ein Spulen-Segment (48) aufweist, das mit dem jeweiligen Spulenstrang (38) elektrisch verbunden ist, wobei die verschiedenen Segmente (40, 48) in der Umfangsrichtung (49) gegeneinander elektrisch isoliert sind.

4. Elektromotor nach Anspruch 3,
**dadurch gekennzeichnet,**
- **dass** im ersten Schleifring (31₁) die verschiedenen Segmente (39, 48) in der Umfangsrichtung (49) so aufeinanderfolgen, dass zumindest ein Spulen-Segment (48) zwischen zwei Pluspol-Segmenten (39) angeordnet ist,
- **dass** im zweiten Schleifring (31₂) die verschiedenen Segmente (40, 48) in der Umfangsrichtung (49) so aufeinanderfolgen, dass zumindest ein Spulen-Segment (48) zwischen zwei Minuspol-Segmenten (40) angeordnet ist.

5. Elektromotor nach Anspruch 3 oder 4,
**dadurch gekennzeichnet,**
- **dass** der erste Schleifring (31₁) für jedes Spulen-Segment (48) ein elektrisch isolierendes Isolator-Segment (41) aufweist, wobei die verschiedenen Segmente (39, 41, 48) in der Umfangsrichtung (49) so aufeinanderfolgen, dass jedes Spulen-Segment (48) einerseits an ein Isolator-Segment (41) und andererseits an ein Pluspol-Segment (39) angrenzt,
- **dass** der zweite Schleifring (31₂) für jedes Spulen-Segment (48) ein elektrisch isolierendes Isolator-Segment (41) aufweist, wobei die verschiedenen Segmente (40, 41, 48) in der Umfangsrichtung (49) so aufeinanderfolgen, dass jedes Spulen-Segment (48) einerseits an ein Isolator-Segment (41) und andererseits an ein Minuspol-Segment (40) angrenzt,
- **dass** das jeweilige Isolator-Segment (41) in der Umfangsrichtung (49) größer ist als das jeweilige Pluspol-Segment (39) und/oder als das jeweilige Minuspol-Segment (40) und/oder als das jeweilige Spulen-Segment (48), und/oder dass das jeweilige Spulen-Segment (48) in der Umfangsrichtung (49) gleich groß ist wie das jeweilige Pluspol-Segment (39) und/oder wie das jeweilige Minuspol-Segment (40).

6. Elektromotor nach Anspruch 3 oder 4,
**dadurch gekennzeichnet,**
- **dass** im ersten Schleifring (31₁) jedes Spulen-Segment (48) in der Umfangsrichtung (49) beiderseits an ein Pluspol-Segment (39) angrenzt, während im zweiten Schleifring (31₂) jedes Spulen-Segment (48) in der Umfangsrichtung (49) beiderseits an ein Minuspol-Segment (40) angrenzt,
- **dass** das jeweilige Spulen-Segment (48) in der Umfangsrichtung (49) kleiner ist als das jeweilige Pluspol-Segment (39) und/oder als das jeweilige Minuspol-Segment (40).

7. Elektromotor nach Anspruch 3 oder 4,
**dadurch gekennzeichnet,**
- **dass** im ersten Schleifring (31₁) jedem Spulenstrang (38) mehrere Spulen-Segmente (48) zugeordnet sind, die in der Umfangsrichtung (49) aufeinanderfolgen und nur durch Pluspol-Segmente (39) voneinander getrennt sind,
- **dass** im zweiten Schleifring (31₂) jedem Spulenstrang (38) mehrere Spulen-Segmente (48) zugeordnet sind, die in der Umfangsrichtung (49) aufeinanderfolgen und nur durch Minuspol-Segmente (40) voneinander getrennt sind,
- **dass** zumindest eines der Spulen-Segmente (48), das einem der Spulenstränge (38) zugeordnet ist, in der Umfangsrichtung (49) an ein anderes Spulen-Segment (48) angrenzt, das einem anderen Spulenstrang (38) zugeordnet ist,
- **dass** Spulen-Segmente (48), die in der Umfangsrichtung (49) beiderseits an Pluspol-Segmente (39) angrenzen, in der Umfangsrichtung (49) gleich groß sind wie die Pluspol-Segmente (39), während Spulen-Segmente (48), die in der Umfangsrichtung (49) an ein anderes Spulen-Segment (48) angrenzen, halb so groß sind wie die Pluspol-Segmente (39),
- **dass** Spulen-Segmente (48), die in der Umfangsrichtung (49) beiderseits an Minuspol-Segmente (40) angrenzen, in der Umfangsrichtung (49) gleich groß sind wie die Minuspol-Segmente (40), während Spulen-Segmente (48), die in der Umfangsrichtung (49) an ein anderes Spulen-Segment (48) angrenzen, halb so groß sind wie die Minuspol-Segmente (40).

8. Elektromotor nach einem der Ansprüche 3 bis 7,
**dadurch gekennzeichnet,**
- **dass** die beiden Schleifringe (31₁, 31₂) relativ zueinander so angeordnet sind, dass die Spulen-Segmente (48) des ersten Schleifrings (31₁) gegenüber den Spulen-Segmenten (48) des zweiten Schleifrings (31₂) hinsichtlich der ihnen zugeordneten Spulenstränge (38) in der Umfangsrichtung (49) versetzt angeordnet sind, und/oder
- **dass** die Kontaktelemente (30), die mit dem jeweiligen Schleifring (31) in Kontakt stehen, axial zwischen den beiden Schleifringen (31₁, 31₂) angeordnet sind, wobei ein mit dem ersten Schleifring (31₁) kontaktiertes erstes Kontaktelement (30₁) zu einem mit dem zweiten Schleifring (31₂) kontaktierten zweiten Kontaktelement (30₂) axial benachbart und davon elektrisch isoliert angeordnet ist.

9. Elektromotor nach einem der Ansprüche 1 bis 8,
**dadurch gekennzeichnet,**
- **dass** die Spulenanordnung (22) axial versetzt zur Schleifringanordnung (29) an bzw. in einem den Stator (18) enthaltenden Gehäuse (25) angeordnet ist, und/oder
- **dass** eine Wicklung (37), die eine einzige Spule (23) oder mehrere, in Reihe geschaltete Spulen (23) bildet, einen Spulenstrang (38) definiert, wobei je Spulenstrang (38) eine separate Schleifringgruppe (32) vorgesehen ist, so dass je ein Spulenstrang (38) elektrisch mit nur einer Schleifringgruppe (32) verbunden ist.

10. Elektromotor nach einem der Ansprüche 1 bis 9,
**dadurch gekennzeichnet,**
- **dass** die Kontaktelementanordnung (28) fest am Rotor (19) angeordnet ist, oder
- **dass** die Kontaktelementanordnung (28) fest an einer Kontaktelementwelle (33) angeordnet ist, die über ein Getriebe (34) mit dem Rotor (19) des Elektromotors (8) antriebsverbunden ist.

11. Elektromotor nach einem der Ansprüche 1 bis 10,
**dadurch gekennzeichnet,**
- **dass** das jeweilige Kontaktelement (30) den jeweiligen Schleifring (31) radial kontaktiert, oder
- **dass** das jeweilige Kontaktelement (30) den jeweiligen Schleifring (31) axial kontaktiert.

12. Elektromotor nach den Ansprüchen 6 und 11,
**dadurch gekennzeichnet,**
**dass** der axial kontaktierte Schleifring (31) in eine axiale Stirnseite (47) des Stators (18) oder eines den Stator (18) drehfest enthaltenden Gehäuses (25) integriert ist.

13. Elektromotor nach einem der Ansprüche 1 bis 12,
**dadurch gekennzeichnet,**
**dass** das jeweilige Kontaktelement (30) über einen am Rotor (19) oder an der Kontaktelementwelle (33) befestigten Kontaktelementträger (35) am Rotor (19) oder an der Kontaktelementwelle (33) angeordnet ist, wobei im Kontaktelementträger (35) eine Feder (36) angeordnet ist, welche das Kontaktelement (30) radial oder axial gegen den jeweiligen Schleifring (31) vorspannt.

14. Elektromotor nach einem der Ansprüche 1 bis 13,
**dadurch gekennzeichnet,**
**dass** zumindest zwei in der Umfangsrichtung benachbarte Segmente (39, 40, 41, 48) in einer Ebene aneinander grenzen, welche die Rotationsachse des Rotors (19) enthält oder welche gegenüber einer die Rotationsachse des Rotors (19) enthaltenden Ebene geneigt ist und parallel zur Rotationsachse des Rotors (19) verläuft oder die gegenüber einer senkrecht zur Rotationsachse des Rotors (19) verlaufenden Ebene geneigt ist und die Rotationsachse des Rotors (19) schneidet.

15. Fahrzeugbauteil mit wenigstens einem Stellglied (7; 10; 15; 16) und mit einem Elektromotor (8) nach einem der Ansprüche 1 bis 14, der mit dem wenigstens einen Stellglied (7; 10; 15; 16) antriebsverbunden ist.

## Claims

1. Electric motor having contact commutation (24) and having an external stator (18) and an internal, rotationally supported rotor (19),
- wherein a magnet assembly (20) having at least one permanent magnet (21) is disposed fixedly at the rotor (19) and a coil assembly (22) having at least one electrical coil (23) is disposed fixedly at the stator (18),
- wherein the contact commutation (24) has a contact element assembly (28), driven rotationally by the rotor (19), having at least one contact element (30) and a slip ring assembly (29), disposed non-rotationally relatively to the stator (18) and connected electrically with the coil assembly (22), having at least one slip ring (31),
- wherein the slip ring assembly (22) has several slip rings (31),
- wherein in each case at least two such slip rings (31) form a slip ring group (32) and are connected electrically with one another via at least one such contact element (30),
**characterised in**
- **that** the respective slip ring group (32) comprises only two slip rings (31), which define a slip ring pair (32),
- **that** the respective slip ring pair (32) comprises a first slip ring (31₁) and a second slip ring (31₂),
- **that** the first slip ring (31₁) is connected with the coil assembly (22) or with the associated coil strand (38),
- **that** the second slip ring (31₂) in the circumferential direction (49) is segmented and has at least one positive terminal segment (39), which is connected electrically with a positive terminal connection (42) of the electric motor (8), which can be connected at a positive terminal (43) of an electrical supply (44) of the electric motor (8), at least one negative terminal segment (40) which is connected electrically with a negative terminal connection (45) of the electric motor (8), which can be connected at a negative terminal (46) of the electrical supply (44), and at least two isolator segments (41), which in the circumferential direction (49) are disposed in each case between a positive terminal segment (39) and a negative terminal segment (40).

2. Electric motor according to claim 1,
**characterised in**
- **that** within the magnet assembly (20) in each case one magnetic north pole (N) and one magnetic south pole (S) define a magnetic pole pair,
- **that** the number of the positive terminal segments (39) and the number of the negative terminal segments (40) are equal to the number of the magnetic pole pairs.

3. Electric motor according to claim 1,
**characterised in**
- **that** within the coil assembly (22) a winding (37), which forms a single coil (23) or several coils (23) connected in series, defines a coil strand (38),
- **that** the coil assembly (22) has several coil strands (38),
- **that** the slip ring assembly (29) has exactly two slip rings (31),
- **that** a first slip ring (31₁) is segmented in the circumferential direction (49) and has several positive terminal segments (39) which are in each case connected electrically with a positive terminal connection (42) of the electric motor (8), connectable at a positive terminal (43) of an electrical supply (44) of the electric motor (8), and has per coil strand (38) at least one coil segment (48), which is connected electrically with the respective coil strand (38), wherein the various segments (39, 48) in the circumferential direction (49) are electrically isolated from one another,
- **that** a second slip ring (31₂) in the circumferential direction (49) is segmented and has several negative terminal segments (40) which are in each case connected electrically with a negative terminal connection (45) of the electric motor (8), connectable at a negative terminal (46) of the electrical supply (44), and has per coil strand (38) at least one coil segment (48), which is connected electrically with the respective coil strand (38), wherein the various segments (40, 48) in the circumferential direction (49) are electrically isolated from one another.

4. Electric motor according to claim 3,
**characterised in**
- **that** in the first slip ring (31₁) the various segments (39, 48) in the circumferential direction (49) succeed one another such that at least one coil segment (48) is disposed between two positive terminal segments (39),
- **that** in the second slip ring (31₂) the various segments (40, 48) in the circumferential direction (49) succeed one another such that at least one coil segment (48) is disposed between two negative terminal segments (40).

5. Electric motor according to claim 3 or 4,
**characterised in**
- **that** the first slip ring (31₁) has for each coil segment (48) an electrically isolating isolator segment (41), wherein the various segments (39, 41, 48) in the circumferential direction (49) succeed one another such that each coil segment (48) adjoins on one side an isolator segment (41) and on the other side a positive terminal segment (39),
- **that** the second slip ring (31₂) has for each coil segment (48) an electrically isolating isolator segment (41), wherein the various segments (40, 41, 48) in the circumferential direction (49) succeed one another such that each coil segment (48) adjoins on one side an isolator segment (41) and on the other side a negative terminal segment (40),
- **that** the respective isolator segment (41) in the circumferential direction (49) is greater than the respective positive terminal segment (39) and/or than the respective negative terminal segment (40) and or than the respective coil segment (48), and/or that the respective coil segment (48) in the circumferential direction (49) is the same size as the respective positive terminal segment (39) and/or as the respective negative terminal segment (40).

6. Electric motor according to claim 3 or 4,
**characterised in**
- **that** in the first slip ring (31₁) each coil segment (48) in the circumferential direction (49) adjoins on both sides a positive terminal segment (39), while in the second slip ring (31₂) each coil segment (48) in the circumferential direction (49) adjoins on both sides a negative terminal segment (40),
- **that** the respective coil segment (48) in the circumferential direction (49) is smaller than the respective positive terminal segment (39) and/or than the respective negative terminal segment (40).

7. Electric motor according to claim 3 or 4,
**characterised in**
- **that** in the first slip ring (31₁), to each coil strand (38) are assigned several coil segments (48), which in the circumferential direction (49) succeed one another and are separated from one another only by positive terminal segments (39),
- **that** in the second slip ring (31₂), to each coil strand (38) are assigned several coil segments (48), which in the circumferential direction (49) succeed one another and are separated from one another only by negative terminal segments (40),
- **that** at least one of the coil segments (48), which is assigned to one of the coil strands (38), in the circumferential direction (49) adjoins another coil segment (48) which is assigned to another coil strand (38),
- **that** coil segments (48), which in the circumferential direction (49) adjoin on both sides positive terminal segments (39), in the circumferential direction (49) are the same size as the positive terminal segments (39), while coil segments (48) which in the circumferential direction (49) adjoin another coil segment (48) are half the size of the positive terminal segments (39),
- **that** coil segments (48), which in the circumferential direction (49) adjoin on both sides negative terminal segments (40) in the circumferential direction (49) are the same size as the negative terminal segments (40), while coil segments (48) which in the circumferential direction (49) adjoin another coil segment (48) are half the size of the negative terminal segments (40).

8. Electric motor according to any of claims 3 to 7,
**characterised in**
- **that** the two slip rings (31₁, 31₂) are disposed relatively to one another such that the coil segments (48) of the first slip ring (31₁) are disposed opposite the coil segments (48) of the second slip ring (31₂) with respect to the coil strands (38) assigned to them offset in the circumferential direction (49), and/or
- **that** the contact elements (30), which are in contact with the respective slip ring (31), are disposed axially between the two slip rings (31₁, 31₂), wherein a first contact element (30₁) contacted with the first slip ring (31₁) is disposed axially adjoining and electrically isolated from a second contact element (30₂) contacted with the second slip ring (31₂).

9. Electric motor according to any of claims 1 to 8,
**characterised in**
- **that** the coil assembly (22) is disposed axially offset to the slip ring assembly (29) at or in a housing (25) containing the stator (18), and/or
- **that** a winding (37), which forms a single coil (23) or several coils (23) connected in series, defines a coil strand (38), wherein per coil strand (38) is provided a separate slip ring group (32) such that in each case one coil strand (38) is connected electrically with only one slip ring group (32).

10. Electric motor according to any of claims 1 to 9,
**characterised in**
- **that** the contact element assembly (28) is disposed fixed at the rotor (19), or
- **that** the contact element assembly (28) is disposed fixed at a contact element shaft (33) which is drivingly connected via a transmission (34) with the rotor (19) of the electric motor (8).

11. Electric motor according to any of claims 1 to 10,
**characterised in**
- **that** the respective contact element (30) contacts the respective slip ring (31) radially, or
- **that** the respective contact element (30) contacts the respective slip ring (31) axially.

12. Electric motor according to claims 6 and 11
**characterised in**
- **that** the axially contacted slip ring (31) is integrated into an axial end face (47) of the stator (18) or of a housing (25) containing in non-rotational manner the stator (18).

13. Electric motor according to any of claims 1 to 12
**characterised in**
**that** the respective contact element (30) is disposed at the rotor (19) or at the contact element shaft (33) via a contact element carrier (35) fixed at the rotor (19) or at the contact element shaft (33), wherein in the contact element carrier (35) is disposed a spring (36) which pretensions the contact element (30) radially or axially against the respective slip ring (31).

14. Electric motor according to any of claims 1 to 13,
**characterised in**
**that** at least two segments (39, 40, 41, 48) adjacent in the circumferential direction adjoin one another in a plane which contains the rotational axis of the rotor (19) or which is tilted with respect to a plane containing the rotational axis of the rotor (19) and extends parallel to the rotational axis of the rotor (19) or which is tilted with respect to a plane extending perpendicularly to the rotational axis of the rotor (19) and cuts the rotational axis of the rotor (19).

15. Vehicle component having at least one actuating element (7; 10; 15; 16) and having an electric motor (8) according to any of claims 1 to 14, which is drivingly connected with the at least one actuating element (7; 10; 15; 16).

## Revendications

1. Moteur électrique avec commutation de contact (24) et avec un stator (18) extérieur ainsi qu'avec un rotor (19) intérieur logé de manière à pouvoir tourner,
- dans lequel un agencement d'aimants (20) avec au moins un aimant permanent (21) est agencé de manière fixe sur le rotor (19) et un agencement de bobines (22) avec au moins une bobine électrique (23) est agencé de manière fixe sur le stator (18),
- dans lequel la commutation de contact (24) comporte un agencement d'éléments de contact (28), entraîné en rotation par le rotor (19) et avec au moins un élément de contact (30), et un agencement de bagues glissantes (29), agencé de manière solidaire en rotation par rapport au stator (18) et relié électriquement à l'agencement de bobines (22) et avec au moins une bague glissante (31),
- dans lequel l'agencement de bagues glissantes (22) comporte plusieurs bagues glissantes (31),
- dans lequel à chaque fois au moins deux bagues glissantes (31) de ce type forment un groupe de bagues glissantes (32) et sont reliées électriquement entre elles par l'intermédiaire d'au moins un élément de contact (30) de ce type,
**caractérisé en ce que**
- le groupe de bagues glissantes (32) respectif ne comprend que deux bagues glissantes (31) qui définissent une paire de bagues glissantes (32),
- la paire de bagues glissantes (32) respective comprend une première bague glissante (31₁) et une deuxième bague glissante (31₂),
- la première bague glissante (31₁) est reliée électriquement à l'agencement de bobines (22) ou à la ligne de bobines (38) associée,
- la deuxième bague glissante (31₂) est segmentée dans la direction circonférentielle (49) et comporte au moins un segment de pôle positif (39), qui est relié électriquement à une borne de pôle positif (42) du moteur électrique (8), laquelle borne de pôle positif peut être raccordée à un pôle positif (43) d'une alimentation en courant (44) du moteur électrique (8), au moins un segment de pôle négatif (40), qui est relié électriquement à une borne de pôle négatif (45) du moteur électrique (8), laquelle borne de pôle négatif peut être raccordée à un pôle négatif (46) de l'alimentation en courant (44), et au moins deux segments isolateurs (41), qui sont agencés dans la direction circonférentielle (49) à chaque fois entre un segment de pôle positif (39) et un segment de pôle négatif (40).

2. Moteur électrique selon la revendication 1,
**caractérisé en ce que**
- un pôle nord magnétique (N) et un pôle sud magnétique (S) définissent à chaque fois une paire de pôles magnétiques à l'intérieur de l'agencement d'aimants (20),
- le nombre des segments de pôle positif (39) et le nombre des segments de pôle négatif (40) sont égaux au nombre des paires de pôles magnétiques.

3. Moteur électrique selon la revendication 1,
**caractérisé en ce que**
- à l'intérieur de l'agencement de bobines (22), un enroulement (37) qui forme une seule bobine (23) ou plusieurs bobines (23) branchées en série définit une ligne de bobines (38),
- l'agencement de bobines (22) comporte plusieurs lignes de bobines (38),
- l'agencement de bagues glissantes (29) comporte exactement deux bagues glissantes (31),
- une première bague glissante (31₁) est segmentée dans la direction circonférentielle (49) et comporte plusieurs segments de pôle positif (39), qui sont reliés électriquement à chaque fois à une borne de pôle positif (42) du moteur électrique (8) qui peut être raccordée à un pôle positif (43) d'une alimentation en courant (44) du moteur électrique (8), et pour chaque ligne de bobines (38) au moins un segment de bobine (48), qui est relié électriquement à la ligne de bobines (38) respective, les différents segments (39, 48) étant isolés électriquement les uns des autres dans la direction circonférentielle (49),
- une deuxième bague glissante (31₂) est segmentée dans la direction circonférentielle (49) et comporte plusieurs segments de pôle négatif (40), qui sont reliés électriquement à chaque fois à une borne de pôle négatif (45) du moteur électrique (8) qui peut être raccordée à un pôle négatif (46) de l'alimentation encourant (44), et pour chaque ligne de bobines (38) au moins un segment de bobine (48), qui est relié électriquement à la ligne de bobines (38) respective, les différents segments (40, 48) étant isolés électriquement les uns des autres dans la direction circonférentielle (49).

4. Moteur électrique selon la revendication 3,
**caractérisé en ce que**
- dans la première bague glissante (31₁), les différents segments (39, 48) se suivent de telle manière dans la direction circonférentielle (49) qu'au moins un segment de bobine (48) est agencé entre deux segments de pôle positif (39),
- dans la deuxième bague glissante (31₂), les différents segments (40, 48) se suivent de telle manière dans la direction circonférentielle (49) qu'au moins un segment de bobine (48) est agencé entre deux segments de pôle négatif (40).

5. Moteur électrique selon la revendication 3 ou 4,
**caractérisé en ce que**
- la première bague glissante (31₁) comporte pour chaque segment de bobine (48) un segment isolateur (41) isolant électriquement, les différents segments (39, 41, 48) se suivant alors de telle manière dans la direction circonférentielle (49) que chaque segment de bobine (48) est adjacent d'une part à un segment isolateur (41) et d'autre part à un segment de pôle positif (39),
- la deuxième bague glissante (31₂) comporte pour chaque segment de bobine (48) un segment isolateur (41) isolant électriquement, les différents segments (40, 41, 48) se suivant alors de telle manière dans la direction circonférentielle (49) que chaque segment de bobine (48) est adjacent d'une part à un segment isolateur (41) et d'autre part à un segment de pôle négatif (40),
- le segment isolateur (41) respectif est plus grand dans la direction circonférentielle (49) que le segment de pôle positif (39) respectif et/ou que le segment de pôle négatif (40) respectif et/ou que le segment de bobine (48) respectif et/ou le segment de bobine (48) respectif est aussi grand dans la direction circonférentielle (49) que le segment de pôle positif (39) respectif et/ou que le segment de pôle négatif (40) respectif.

6. Moteur électrique selon la revendication 3 ou 4,
**caractérisé en ce que**
- dans la première bague glissante (31₁), chaque segment de bobine (48) est adjacent dans la direction circonférentielle (49), des deux côtés, à un segment de pôle positif (39) tandis que, dans la deuxième bague glissante (31₂), chaque segment de bobine (48) est adjacent dans la direction circonférentielle (49), des deux côtés, à un segment de pôle négatif (40),
- le segment de bobine (48) respectif est plus petit dans la direction circonférentielle (49) que le segment de pôle positif (39) et/ou que le segment de pôle négatif (40).

7. Moteur électrique selon la revendication 3 ou 4,
**caractérisé en ce que**
- dans la première bague glissante (31₁), à chaque ligne de bobines (38) sont associés plusieurs segments de bobine (48) qui se suivent dans la direction circonférentielle (49) et ne sont séparés les uns des autres que par des segments de pôle positif (39),
- dans la deuxième bague glissante (31₂), à chaque ligne de bobines (38) sont associés plusieurs segments de bobine (48) qui se suivent dans la direction circonférentielle (49) et ne sont séparés les uns des autres que par des segments de pôle négatif (40),
- au moins l'un des segments de bobine (48) qui est associé à l'une des lignes de bobines (38) est adjacent dans la direction circonférentielle (49) à un autre segment de bobine (48) qui est associé à une autre ligne de bobines (38),
- des segments de bobine (48) qui sont adjacents dans la direction circonférentielle (49), des deux côtés, à des segments de pôle positif (39) sont aussi grands dans la direction circonférentielle (49) que les segments de pôle positif (39) tandis que des segments de bobine (48) qui sont adjacents dans la direction circonférentielle (49) à un autre segment de bobine (48) sont égaux en grandeur à la moitié des segments de pôle positif (39),
- des segments de bobine (48) qui sont adjacents dans la direction circonférentielle (49), des deux côtés, à des segments de pôle négatif (40) sont aussi grands dans la direction circonférentielle (49) que les segments de pôle négatif (40) tandis que des segments de bobine (48) qui sont adjacents dans la direction circonférentielle (49) à un autre segment de bobine (48) sont égaux en grandeur à la moitié des segments de pôle négatif (40).

8. Moteur électrique selon l'une quelconque des revendications 3 à 7,
**caractérisé en ce que**
- les deux bagues glissantes (31₁, 31₂) sont agencées l'une par rapport à l'autre de telle manière que les segments de bobine (48) de la première bague glissante (31₁) sont agencés décalés dans la direction circonférentielle (49) par rapport aux segments de bobine (48) de la deuxième bague glissante (31₂) du point de vue des lignes de bobines (38) qui leur sont associées, et/ou
- les éléments de contact (30) qui sont en contact avec la bague glissante (31) respective sont agencés de façon axiale entre les deux bagues glissantes (31₁, 31₂), un premier élément de contact (30₁) qui est mis en contact avec la première bague glissante (31₁) étant alors agencé de façon axiale au voisinage d'un deuxième élément de contact (30₂) qui est mis en contact avec la deuxième bague glissante (31₂) et étant isolé électriquement de celui-ci.

9. Moteur électrique selon l'une quelconque des revendications 1 à 8,
**caractérisé en ce que**
- l'agencement de bobines (22) est agencé, décalé de façon axiale par rapport à l'agencement de bagues glissantes (29), sur ou dans un boîtier (25) contenant le stator (18), et/ou
- un enroulement (37) qui forme une seule bobine (23) ou plusieurs bobines (23) branchées en série définit une ligne de bobines (38), un groupe de bagues glissantes (32) séparé étant alors prévu pour chaque ligne de bobines (38) de telle sorte qu'à chaque fois une ligne de bobines (38) n'est reliée électriquement qu'à un seul groupe de bagues glissantes (32).

10. Moteur électrique selon l'une quelconque des revendications 1 à 9,
**caractérisé en ce que**
- l'agencement d'éléments de contact (28) est agencé de manière fixe sur le rotor (19), ou
- l'agencement d'éléments de contact (28) est agencé de manière fixe sur un arbre d'élément de contact (33) qui est en liaison motrice avec le rotor (19) du moteur électrique (8) par l'intermédiaire d'une transmission (34).

11. Moteur électrique selon l'une quelconque des revendications 1 à 10,
**caractérisé en ce que**
- l'élément de contact (30) respectif met en contact de façon radiale la bague glissante (31) respective, ou
- l'élément de contact (30) respectif met en contact de façon axiale la bague glissante (31) respective.

12. Moteur électrique selon les revendications 6 et 11,
**caractérisé en ce que** la bague glissante (31) en contact axial est intégrée dans un côté frontal axial (47) du stator (18) ou d'un boîtier (25) contenant le stator (18) de manière solidaire en rotation.

13. Moteur électrique selon l'une quelconque des revendications 1 à 12,
**caractérisé en ce que** l'élément de contact (30) respectif est agencé sur le rotor (19) ou sur l'arbre d'élément de contact (33) par l'intermédiaire d'un support d'élément de contact (35) qui est fixé au rotor (19) ou à l'arbre d'élément de contact (33), un ressort (36) étant agencé dans le support d'élément de contact (35), lequel ressort précontraint l'élément de contact (30) de façon radiale ou de façon axiale contre la bague glissante (31) respective.

14. Moteur électrique selon l'une quelconque des revendications 1 à 13,
**caractérisé en ce qu'**au moins deux segments (39, 40, 41, 48) voisins en direction circonférentielle sont adjacents dans un plan qui contient l'axe de rotation du rotor (19) ou qui est incliné par rapport à un plan contenant l'axe de rotation du rotor (19) et s'étend parallèlement à l'axe de rotation du rotor (19) ou qui est incliné par rapport à un plan s'étendant perpendiculairement à l'axe de rotation du rotor (19) et coupe l'axe de rotation du rotor (19).

15. Pièce de véhicule avec au moins un organe de réglage (7 ; 10, 15 ; 16) et avec un moteur électrique (8) selon l'une quelconque des revendications 1 à 14 qui est en liaison motrice avec l'au moins un organe de réglage (7 ; 10, 15 ; 16).
